# EUROPÄISCHE PATENTSCHRIFT

(11) **EP 3 458 737 B1**
(45) Veröffentlichungstag und Bekanntmachung des Hinweises auf die Patenterteilung: **08.06.2022**
(21) Anmeldenummer: 17716152.8
(22) Anmeldetag: 03.04.2017
(51) Int. Cl.: F16D 55/226, F16D 65/097

(54) **SCHEIBENBREMSE FÜR EIN NUTZFAHRZEUG UND BREMSBELAGSATZ**
DISC BRAKE FOR A UTILITY VEHICLE AND BRAKE PAD SET
FREIN À DISQUE POUR VÉHICULE UTILITAIRE ET JEU DE GARNITURES DE FREIN

(30) Priorität: 20.05.2016 DE 102016109360
(43) Veröffentlichungstag der Anmeldung: 27.03.2019
(73) Patentinhaber: KNORR-BREMSE Systeme für Nutzfahrzeuge GmbH, 80809 München (DE)
(72) Erfinder: FISCHL, Tobias, 80336 München (DE); PRITZ, Wolfgang, 80637 München (DE); PETSCHKE, Andreas, 94127 Neuburg am Inn (DE); SCHROPP, Josef, 94428 Eichendorf (DE); DAHLENBURG, Julian Cato, 91166 Georgensgmünd (DE); BARTEL, Markus, 80992 München (DE)
(86) Internationale Anmeldenummer: PCT/EP2017/057857
(87) Internationale Veröffentlichungsnummer: WO 2017/198387

(56) Entgegenhaltungen:
- DE-U1-202013 102 650
- FR-A1- 2 437 528
- FR-A5- 2 061 830

## Beschreibung

Die Erfindung betrifft eine Scheibenbremse für ein Nutzfahrzeug, mit einem eine Bremsscheibe übergreifenden, vorzugsweise als Schiebesattel ausgebildeten Bremssattel, der an einem ortsfesten Bremsträger angeordnet ist und mit einer Zuspanneinrichtung zum Zuspannen der Bremse, zwei Bremsbelägen, die jeweils einen Belagträger und einen darauf befestigten Reibbelag aufweisen, von denen der eine als zuspannseitiger Bremsbelag mittels der Zuspanneinrichtung auf der einen Seite der Bremsscheibe gegen die Bremsscheibe pressbar ist und von der andere als reaktionsseitiger Bremsbelag auf der gegenüberliegenden Seite der Bremsscheibe angeordnet ist, und die jeweils in einen Belagschacht eingesetzt sind, wobei der Bremssattel eine zentrale Sattelöffnung über der Bremsscheibe aufweist, durch welche die zwei Bremsbeläge in die Belagschächte einsetzbar sind. Die Erfindung bezieht sich auch auf einen Bremsbelagsatz für eine solche Scheibenbremse.

Bei einer gattungsgemäßen, insbesondere als Schiebesattel-Bremse ausgebildeten Scheibenbremse, wird im Fall einer Bremsung mittels einer Zuspanneinrichtung, die pneumatisch oder elektromotorisch betätigbar ist, ein aktionsseitiger Bremsbelag gegen eine fahrzeugseitige Bremsscheibe gepresst. Im weiteren Verlauf des Bremsvorgangs wird der Bremssattel, bezogen auf die Bremsscheibe, entgegen der Zuspannrichtung des aktionsseitigen Bremsbelages verschoben unter Mitnahme und Anpressen des gegenüberliegenden, reaktionsseitigen Bremsbelages an die andere Seite der Bremsscheibe.

Zum Stand der Technik sei zunächst die DE 40 20 287 A1 genannt. Nach dieser Schrift ist an den beiden Bremsbelägen jeweils eine als Blattfeder ausgebildete Belagfeder vorgesehen. Die Belagträger werden nach dem Einführen in ihren Belagschacht jeweils mit der Belagfeder gehalten, die ihrerseits in montierter Stellung gemeinsam durch einen von der Oberseite auf die Blattfeder wirkenden, in Querrichtung zur Längsachse der Blattfeder sich erstreckenden Haltebügel gesichert sind. Zur Festlegung der Belagfeder sind an den Belagträger (bzw. die Belagträgerplatte) mit Hinterschneidungen versehene Laschen angeformt, die schlitzförmige Ausnehmungen in der Belagfeder durchtreten, die dabei die Hinterschneidungen hintergreifen, so dass ein Formschluss gebildet ist, durch den die Belagfeder in radialer Richtung gehalten wird und zwar so, dass ein selbsttätiges Lösen in entspannter oder teilentspannter Lage ausgeschlossen ist. Einen weiteren ähnlichen Stand der Technik zeigt die DE 14 2014 106 090 A1. Der Bremssattel weist nach diesen Schriften jeweils eine zentrale Sattelöffnung über der Bremsscheibe aufweist, durch welche die zwei Bremsbeläge in die Belagschächte einsetzbar sind, was eine einfachen Wechsel er Bremsbeläge ermöglicht. Andererseits macht es dies notwendig. Die Bremsbeläge in den Belagschächten auch einfache Weise radial - bezogen im Rahmen dieser Anmeldung auf die Bremsscheibendrehachse nach außen hin - zu sichern.

Bei Festsattelbremsen ist dieses Problem nicht in dieser Form gegeben, da dort in der Regel eine Strebe über die Bremsscheibe geführt ist, die zwar eine Belüftungsöffnung aufweisen kann, die aufgrund ihrer Dimensionierung aber nicht zum Belagwechsel gedacht und bestimmt ist. Ein Belaghaltebügel, der sich über die Sattelöffnung erstreckt, ist damit nicht erforderlich. Weitergebildet wird die eingangs beschriebene Lösung jeweils in den Patenten EP 1 963 702 B1 und der EP 2 255 101 B1. Durch diese Lösungen wird mittels einer an dem Belagträger festgelegten und vorzugsweise relativ zu dieser radial beweglichen Haube, welche von der oder von einem Teil der Belagfeder durchsetzt wird, erreicht, dass die Belagfeder insbesondere im Belastungsbereich lastübertragend stets sicher eingespannt ist.

Zum technologischen Hintergrund seien noch die EP 0 694 134 B1, die DE 10 2012 110 461 A1, die FR2437528 A1 und die WO 2014/079 869 A1 genannt.

Der Erfindung liegt die Aufgabe zugrunde, eine Scheibenbremse der gattungsgemäßen Art so weiterzuentwickeln, dass mit konstruktiv einfachen Mitteln ein gutes Bremsverhalten erzielt wird. Eine weitere Aufgabe besteht darin, einen entsprechenden Bremsbelag und einen entsprechenden Bremsbelagsatz bereitzustellen.

Diese Aufgabe wird durch eine Scheibenbremse mit den Merkmalen des Anspruchs 1 gelöst.

Die weitere Aufgabe wird durch einen Bremsbelagsatz mit den Merkmalen des Anspruchs 22 gelöst.

Anspruch 1 schafft eine Scheibenbremse für ein Nutzfahrzeug, mit einem eine Bremsscheibe übergreifenden, vorzugsweise als Schiebesattel ausgebildeten Bremssattel, der an einem ortsfesten Bremsträger angeordnet ist und mit einer Zuspanneinrichtung zum Zuspannen der Bremse, und mit zwei Bremsbelägen, die jeweils einen Belagträger und einen darauf befestigten Reibbelag aufweisen, von denen der eine als zuspannseitiger Bremsbelag mittels der Zuspanneinrichtung auf der einen Seite der Bremsscheibe gegen die Bremsscheibe pressbar ist und von der andere als reaktionsseitiger Bremsbelag auf der gegenüberliegenden Seite der Bremsscheibe angeordnet ist, wobei die Bremsbeläge jeweils in einen Belagschacht eingesetzt sind -bzw. bei der Montage einsetzbar sind (so dass sie durch diese Öffnung hindurch "passen müssen) - und wobei der Bremssattel eine zentrale Sattelöffnung über der Bremsscheibe aufweist, durch welche die zwei Bremsbeläge in den jeweiligen Belagschacht einsetzbar sind. Dabei ist zudem ein Niederhaltebügel vorgesehen, der derart ausgebildet ist, dass er lediglich den einen der beiden, vorzugsweise aber nicht zwingend - den reaktionsseitigen Bremsbelag in seinem Belagschacht radial sichert, wobei der Niederhaltebügel mit einem bzw. seinem von dem reaktionsseitigen Bremsbelag abgewandten Ende an dem Bremssattel gehalten ist, insbesondere lösbar oder unlösbar dort gehalten ist.

Einerseits werden derart eine vorteilhafte Scheibenbremse und ein besonders vorteilhafter reaktionsseitiger oder zuspannseitiger Bremsbelag geschaffen, der eine einfache sowie kurze und vorteilhaft auf die Funktion des Niederhaltens dieses einen Bremsbelages beschränkte Bauform aufweist. Der kurze Niederhaltebügel führt durch den geringeren Materialeinsatz zu einer Gewichts- und Kostenreduzierung der Bremse.

Es ist vorteilhaft, dass der Niederhaltebügel lediglich den einen der beiden Bremsbeläge ganz oder teilweise axial parallel zur Bremsscheibe übergreift, um ihn zu sichern. Derart wird dieser Belag quasi radial "von oben" im Belagschacht des Bremsträgers oder des Bremssattels gehalten und gegen (zu große radiale) Bewegungen gesichert. Dabei kann der niedergehaltene Belag in einen Belagschacht des Bremsträgers oder des Bremssattels einsetzbar sein. Es ist eine besonders bevorzugte Variante ist es, wenn beide Bremsbeläge in Belagschächten des Bremsträgers angeordnet sind und durch die Öffnung im Bremssattel - die für die Bremsbeläge eine Montageöffnung ist - in diese einsetzbar sind, und zwar im Wesentlichen radial von oben und ggf. ergänzend durch eine axiale kleinere Bewegung. Ein Bremsträger mit Belagschächten auf beiden Seiten der Bremsscheibe ist sehr stabil und vorteilhaft. Der Belagschacht stützt den Belag in Umfangsrichtung und radial nach unten zur Bremsscheibe hin. Nach oben hin sichert dann den einen Bremsbelag er axial "kurze" Niederhaltebügel gegen Ausfallen und zu große radiale Bewegungen, ggf. unterstützt von einer dazwischen angeordneten Feder. Der andere Bremsbelag wird auf andere Weise - nicht von dem gleichen Niederhaltebügel - radial gesichert.

Ein Sichern des reaktionsseitigen Bremsbelages mit dem "kurzen" Niederhaltebügel hat den Vorteil, dass sie leicht realisierbar ist, insbesondere, wenn dieser im Bremssattel axial unbeweglich gehalten ist und sich bei Bremsungen relativ zum Bremssattel insbesondere im Bereich seiner Rückenplatte nicht verschiebt.

Dabei kann nach Varianten der Niederhaltebügel an dem Bremssattel lösbar oder unlösbar befestigt sein oder einstückig mit diesem ausgestaltet sein.

Vorteilhaft ist eine optionale Ausgestaltung des Niederhaltebügels mit diesem Bremsbelag als Baueinheit, die als Ganzes beim Belagwechsel ausgetaucht wird. Dies ist einfach und führt zu einer einfachen und sicheren Erneuerung aller zu wechselnden Elemente an der Baueinheit "reaktionsseitiger Belag" (Bremsbelag, Belagfeder, wenn vorhanden: Haube und Niederhaltebügel).

Der Niederhaltebügel kann auf dem Belagträger aufliegen oder ihn hintergreifen und derart mit diesem zusammenwirken. Er kann auch formschlüssig mit ihm zusammenwirken, so beispielsweise z.B. mit einem Vorsprung formschlüssig in ihn im Bereich einer entsprechenden Vertiefung eingreifen (oder umgekehrt).

Als eine mögliche - besonders vorteilhafte - Variante kann der Niederhaltebügel unverlierbar mit dem Belag verbunden werden, insbesondere unverlierbar mit dem Belagträger verbunden werden. Dies hat den Vorteil, das diese Baugruppe komplett verbaut wird und somit ein Falschverbau ausgeschlossen wird. Falschverbau bedeutet in diesem Fall, das die Rückenplatte zur Bremsscheibe hin verbaut wäre.

Dabei sind unterschiedliche Verbindungsarten zwischen Niederhaltebügel und Bremsbelag möglich. Die Verbindung kann über eine Haube erfolgen, wobei hier eine oder mehrere Laschen vorgesehen werden, welche den Niederhaltebügel ganz oder teilweise umgreifen und anschließend über Schweißung, Nietung, Vertaumeln oder ähnliche Verfahren so montiert wird, das eine Demontage ohne Zerstörung eines Bauteils nicht mehr möglich ist. Die Umgreifung kann nach hinten, wie in den Skizzen dargestellt oder nach oben erfolgen.

Die Verbindung kann auch über einen Bundbolzen erfolgen, der z.B. durch den Niederhaltebügel durchgereift und auf die Haube aufgeschweißt oder vernietet (stoff- kraft- oder formschlüssig) wird.

Die Verbindung kann auch über einen Bolzen erfolgen, der in der Belagrückenplatte fest oder verschiebbar befestigt ist.

Der Niederhaltebügel kann auch die Belagrückenplatte ganz oder teilweise durchgreifen. Anschließend wird bei einer solchen Variante auf einem Niederhaltebügel eine Feder dauerhaft befestigt, so das der Niederhaltebügel - wie oben bereits erwähnt - unverlierbar mit dem Belag verbunden ist.

In einem weiteren Konzept kann die Belaghaltefeder vom Belag weg verlagert werden. In einem vom Belag entfernten Bereich treten in der Regel geringere Temperaturen als direkt am Belag auf, was sich positv auf die Lebensdauer als auch auf die größere Auswahlmöglichkeit von Federmaterialien auswirkt. Da die Federn gegen Korrosion mit einer Beschichtung geschützt sind, bei denen sich die Temperatur ebenfalls auf die Lebensdauer auswirkt, könnte auch hier eine Verbesserung erfolgen. Der Niederhaltebügel wird hierbei mit dem Belag fest oder mit Spiel zum Toleranzausgleich verbunden. Die Feder drückt in diesem Fall den Niederhaltebügel nach unten. Über den Niederhaltebügel wird der Belag nach unten auf den Bremsträger gedrückt. Diese Federung kann über unterschiedliche Federausführungen erfolgen z.B.: Blattfeder, Spiralfeder, Schenkelfeder, ...

Eine Arretierung bzw. ein Halten des Niederhaltebügels am Belag und/oder am Bremssattel kann einfach mittels eines oder mehreren Befestigungsmitteln, insbesondere Bolzen(s) oder Klammer(n) oder einer oer mehreren Schraube(n) erfolgen.

So ist es denkbar, und vorteilhaft einfach, wenn der Niederhaltebügel an einem Teil des reaktionsseitigen Bremsbelags unlösbar festgelegt ist. Er kann beispielsweise auch an dem Belagträger stoffschlüssig befestigt sein, beispielsweise schweißend.

GEschaffen wird auch ein vorteilhafter Bremsbelag für eine Scheibenbremse nach einem der darauf bezogenen Ansprüche, der einen Belagträger und einen darauf befestigten Reibbelag aufweist, welcher Bremsbelag zum Zusammenwirken mit dem Niederhaltebügel ausgebildet ist. Der Niederhaltebügel und der Bremsbelag können - müssen aber nicht zwingend - dabei eine Baueinheit bilden.

Vorzugsweise ist dabei der Niederhaltebügel derart ausgebildet, dass er lediglich einen von zwei der beiden Bremsbeläge in seinem Belagschacht an einer Scheibenbremse radial sichert.

Dabei ist es besonders vorteilhaft, wenn der Niederhaltebügel an dem reaktionsseitigen Bremsbelag festgelegt ist, da dieser im Bremssattel axial festgelegt ist und nicht mit zunehmendem Verschleiß in diesem verschoben wird. Insofern kann die Erfindung hier einfach realisiert werden. Sie ist aber nicht auf diese Variante zu beschränken.

Nach einer weiteren vorteilhaften Variante, die näher in den Unteransprüchen 16 bis 20 beschreiben ist, ist eine Kabelbrücke vorgesehen, an der wenigstens ein Signalkabel angeordnet und gehalten ist, welche Kabelbrücke die Öffnung des Bremssattels überbrückt und welche in wenigstens zwei Bereichen direkt oder indirekt an dem Bremssattel befestigt ist. Derart kann ein Signalkabel trotz des "kurzen" Niederhaltebügels gut über die Öffnung des Bremssattels gelegt werden.

Geschaffen wird auch ein Bremsbelagsatz mit einem reaktionsseitigen Bremsbelag nach einem der Ansprüche 22 bis 28 und mit einem zuspannseitigen Bremsbelag, der mittels wenigstens eines Formschlusselementes am Belagträger radial im Bremsträger gesichert ist. Derart benötigt dieser Bremsbelag auf der Zuspannseite keinen Niederhaltebügel zur radialen Sicherung. Darüber hinaus reduziert dieser Belag den Effekt des Schrägverschleißes. Nach einer Erkenntnis der Erfindung muss der reaktionsseitige Beklag diese Bauform nicht unbedingt auch aufweisen. Er kann vielmehr auch ohne Vorsprünge ausgestaltet werden. Dann ist der "kurze" Niederhaltebügel besonders vorteilhaft. Insgesamt wird derart eine sehr kostengünstige Scheibenbremse mit zwei auf ihre Aufgaben optimal angepassten Bremsbelägen als Belagsatz geschaffen.

Geschaffen wird kurzgefasst auch vorteilhaft eine Scheibenbremse für ein Nutzfahrzeug, mit einem eine Bremsscheibe übergreifenden, vorzugsweise als Schiebesattel ausgebildeten Bremssattel, der an einem ortsfesten Bremsträger befestigt ist und eine zentrale Sattelöffnung über der Bremsscheibe aufweist, mit einer Zuspanneinrichtung zum Zuspannen der Bremse, und mit zwei durch die Sattelöffnung einsetzbaren Bremsbelägen, die jeweils einen Belagträger und einen darauf befestigten Reibbelag aufweisen, von denen der eine als zuspannseitiger Bremsbelag mittels der Zuspanneinrichtung auf der einen Seite der Bremsscheibe gegen die Bremsscheibe pressbar ist und von der andere als reaktionsseitiger Bremsbelag auf der gegenüberliegenden Seite der Bremsscheibe angeordnet ist, und wobei ein Niederhaltebügel vorgesehen ist, der derart ausgebildet ist, dass er lediglich den einen der beiden Bremsbeläge im Belagschacht radial sichert bzw. radial relativ zur Bremsscheibendrehachse niederhält.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Fig. 1: in a) eine perspektivische Ansicht einer ersten erfindungsgemäßen Scheibenbremse und in b) einen Ansicht eines Bremsträgers der Scheibenbremse aus a);
- Fig. 2: die Ansicht aus Fig. 1a mit teilweise ausgeblendetem Bremssattel;
- Fig. 3: eine perspektivische Ansicht eines zuspannseitigen Bremsbelages der Scheibenbremse aus Fig. 1 (und der Scheibenbremse aus Fig. 9);
- Fig. 4: einen ersten reaktionsseitigen Bremsbelag mit einer Belagfeder, einer Haube und einem daran angeordneten Niederhaltebügel;
- Fig. 5: eine teilgeschnittene Ansicht der Anordnung aus Fig. 4;
- Fig. 6: den Bremsbelag der Anordnung aus Fig. 4 und 5;
- Fig. 7: den Niederhaltebügel der Anordnung aus Fig. 4;
- Fig. 8: eine Haube der Anordnung aus Fig. 4;
- Fig. 9: eine perspektivische Ansicht einer zweiten erfindungsgemäßen Scheibenbremse;
- Fig. 10: die Ansicht aus Fig. 9 mit teilweise ausgeblendetem Bremssattel;
- Fig. 11: eine Variante eines reaktionsseitigen Bremsbelags mit einem daran angeordneten Niederhaltebügel;
- Fig. 12: eine teilgeschnittene Ansicht der Anordnung aus Fig. 11;
- Fig. 13: den Bremsbelag der Anordnung aus Fig. 11 und 12;
- Fig. 14: den Niederhaltebügel der Anordnung aus Fig. 11;
- Fig. 15: eine Haube des Bremsbelags aus Fig. 13 und 14;
- Fig. 16: eine weitere Variante eines reaktionsseitigen Bremsbelags mit einem daran angeordneten Niederhaltebügel; und
- Fig. 17: in a) eine perspektivische Ansicht eines Teils einer dritten weiteren erfindungsgemäßen Scheibenbremse, in b) einen Schnitt durch einen Teilbereich der Anordnung aus a), in c) eine teilgeschnittene Ansicht eines Teilbereichs der Anordnung aus a), und in d) einen Niederhaltebügel der Anordnung aus a) in separater perspektivischer Darstellung;
- Fig. 18: eine perspektivische Ansicht eines Teils einer vierten weiteren erfindungsgemäßen Scheibenbremse;
- Fig. 19: in a) eine perspektivische Ansicht eines Teils einer fünften weiteren erfindungsgemäßen Scheibenbremse und in b) einen Niederhaltebügel für die Anordnung aus a) in jeweils separater perspektivischer Darstellung;
- Fig. 20: in a) eine perspektivische Ansicht eines Teils einer weiteren erfindungsgemäßen Scheibenbremse und in b) einen Niederhaltebügel für die Anordnung aus Fig. 19 oder 20a) in jeweils separater perspektivischer Darstellung:
- Fig. 21: in a) eine perspektivische Ansicht eines Teils einer sechsten weiteren erfindungsgemäßen Scheibenbremse mit einer Kabelbrücke und in b) die Kabelbrücke der Scheibenbremse aus a); und
- Fig. 22: in a) eine perspektivische Ansicht eines Teils einer siebten weiteren erfindungsgemäßen Scheibenbremse mit einer anders als in Fig. 21 gestalteten Kabelbrücke, in b) eine Ausschnittsvergrößerung aus a), in c) die Kabelbrücke der Scheibenbremse aus a) und in d) einen Belaghaltebügel der Scheibenbremse aus a).

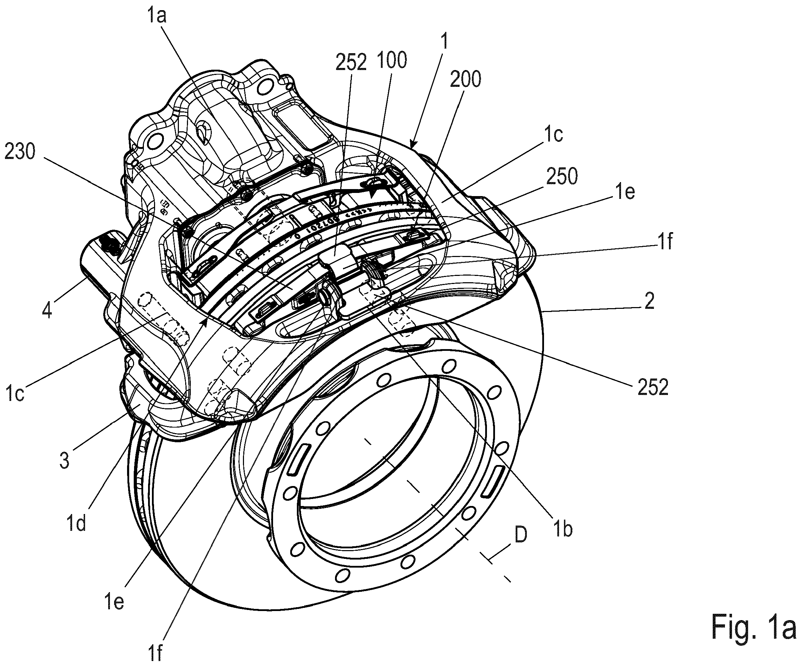

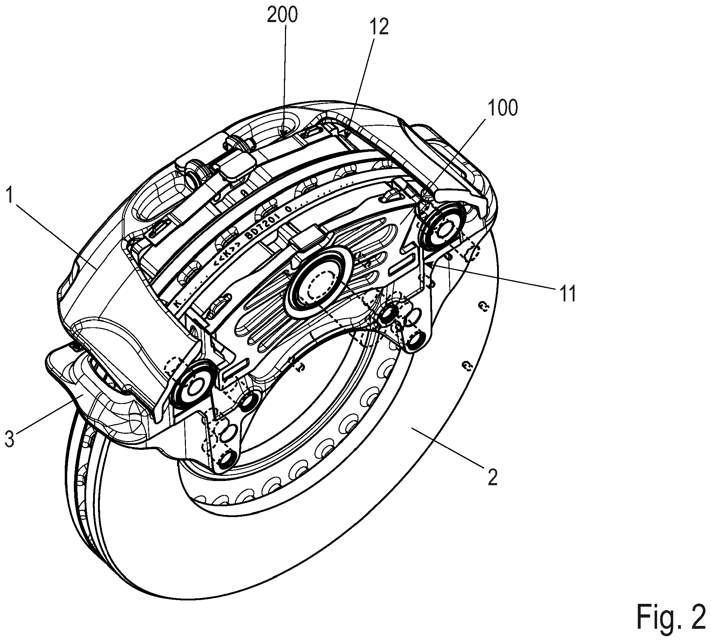

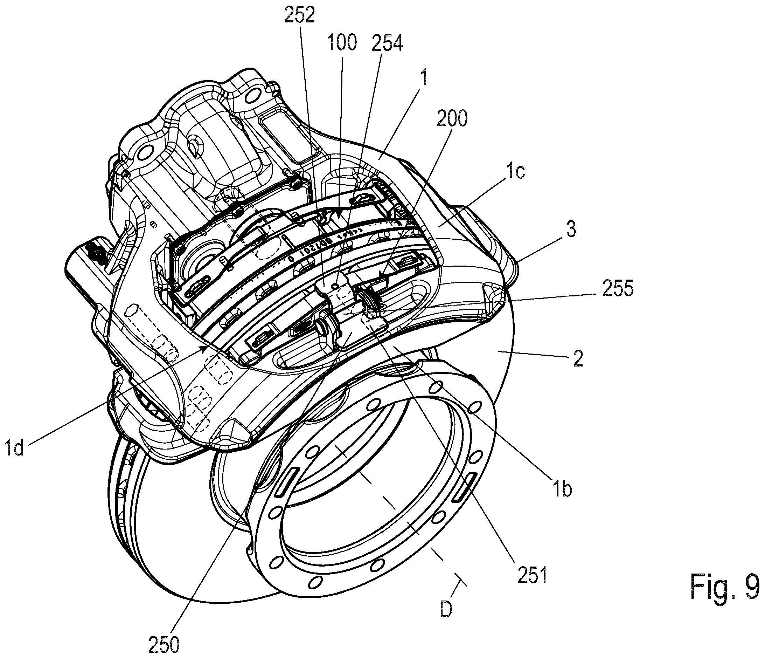

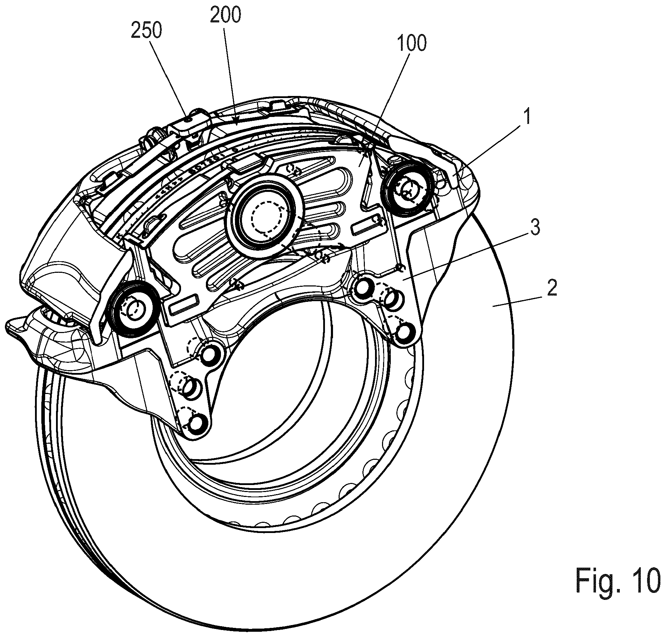

In der **Fig. 1a** und **2** sowie der **Fig. 9** und **10** ist jeweils eine Scheibenbremse für ein Nutzfahrzeug abgebildet. Die Scheibenbremse weist einen eine Bremsscheibe 2 übergreifenden Bremssattel 1 auf. Nicht dargestellt ist ein zugehöriger elektrischer oder pneumatischer Aktuator (z.B. ein Bremszylinder). Die Bremsscheibe 2 weist eine Bremsscheibendrehachse D auf. Der Bremssattel 1 ist an einem Bremsträger 3 angeordnet. Hier ist der Bremssattel 1 in bevorzugter Ausgestaltung bezogen auf die Bremsscheibe 2 axial in Richtung der Bremsscheibendrehachse D (auf welche sich hier Begriffe wie "axial" und "radial" beziehen) verschiebbar an dem Bremsträger 3 angeordnet. Dazu ist der Bremssattel 1 auf hier nicht im Detail erkennbaren Führungsholmen 4 gelagert, die mit dem ortsfest am Fahrzeug gehaltenen Bremsträger 3 verbunden sind.

Der Bremssattel 1 umfasst einen Zuspannabschnitt 1a, einen Sattelrücken 1b und zwei Zugstreben 1c. Der Zuspannabschnitt 1a nimmt eine nicht gezeigte Zuspanneinrichtung der Scheibenbremse 1 auf.

Der Zuspannabschnitt 1a verläuft mit einer Seite parallel zu der Ebene der Bremsscheibe 2 auf einer Seite der Bremsscheibe 2. Auf der anderen Seite der Bremsscheibe 2 ist, ebenfalls parallel zu der Bremsscheibe 2 verlaufend, der Sattelrücken 1b angeordnet. Der Sattelrücken 1b ist mit dem Zuspannabschnitt 1a an jeweils einem Ende mit jeweils einer Zugstrebe 1c, verbunden. Die Zugstreben 1c verlaufen dabei im Wesentlichen rechtwinklig zum Zuspannabschnitt 1a und zum Sattelrücken 1b.

Der Zuspannabschnitt 1a, der Sattelrücken 1b und die Zugstreben 1c legen in dieser Anordnung eine zentrale Öffnung 1d zwischen sich fest, welche die Bremsscheibe 2 überspannt. Die Öffnung 1d weist eine gedachte Längsmittellinie auf, welche in der Ebene der Bremsscheibe 2 liegt und die gedachten Mitten der Zugstreben 1c verbindet. Außerdem weist die Öffnung 1d eine weitere gedachte Quermittellinie auf, welche eine gedachte Mitte des Zuspannabschnitts 1a mit einer gedachten Mitte des Sattelrückens 1b verbindet.

Beidseits der Bremsscheibe 2 ist jeweils ein Bremsbelag 100, 200 vorgesehen (in Fig. 9 nicht dargestellt). Der eine Bremsbelag 100 - nachfolgend auch zuspannseitiger Bremsbelag 100 genannt - ist auf der Seite einer Zuspanneinrichtung angeordnet. Der weitere Bremsbelag 200 - nachfolgend auch reaktionsseitiger Bremsbelag 200 genannt - ist auf der der Zuspannseite gegenüberliegenden Seite der Bremsscheibe 2 angeordnet.

Die zentrale Sattelöffnung 1d über der Bremsscheibe ist dazu ausgelegt bzw. so dimensioniert, dass die zwei Bremsbeläge durch die Sattelöffnung in den Bremsträger einsetzbar sind, was einen einfachen Belagwechsel ermöglicht.

Eine Bremsung erfolgt mittels der im Zuspannabschnitt 1a des Bremssattels 1 dort in einem Aufnahmeraum angeordneten Zuspanneinrichtung mit einem Bremshebel, der in einem Dom bzw. dem Zuspannabschnitt 1a des Bremssattels 1 positioniert ist. Die Zuspanneinrichtung wird von einem nicht dargestellten Aktuator betätigt. Sie ist vorzugsweise pneumatisch betätigt oder elektromechanisch. Dazu wird sie vorzugsweise mit einem Bremszylinder versehen, der an dem Bremssattel der Scheibenbremse angeordnet werden kann (hier nicht dargestellt).

Die beiden Bremsbeläge 100, 200 sind während Bremsungen beidseitig an die Bremsscheibe 2 anpressbar. Der zuspannseitige Bremsbelag 100 kontaktiert bei einer Ausgestaltung als Schiebesattelbremse bei einer Bremsung die Bremsscheibe 2. Im weiteren Verlauf wird mittels auftretender Reaktionskräfte der Bremssattel 1 entgegengesetzt verschoben, unter Mitnahme des reaktionsseitigen Bremsbelags 200, bis dieser gleichfalls an der Bremsscheibe 2 reibend zur Anlage kommt.

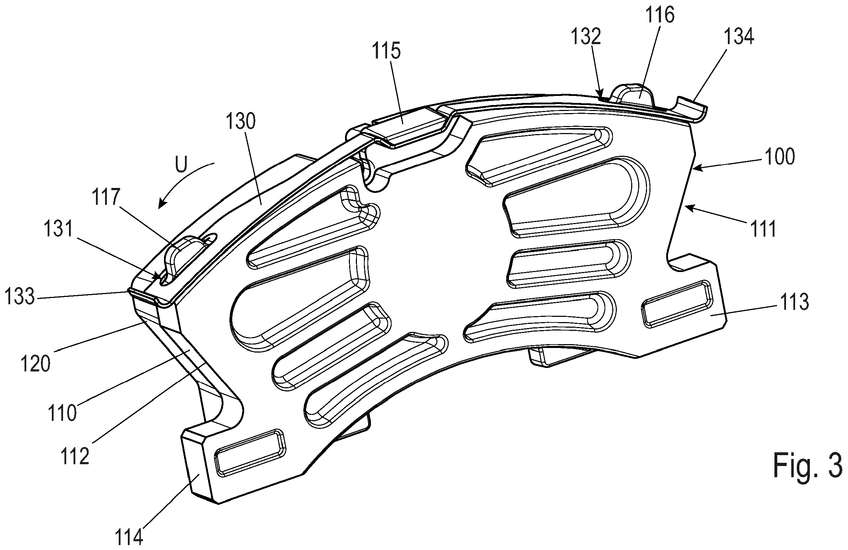

Jeder der Bremsbeläge 100, 200 - siehe **Fig. 3****,** **4** **und** **11** **und** **16** - weist jeweils einen Belagträger 110, 210 und einen auf der der Bremsscheibe 2 zugewandten Seite daran befestigten Reibbelag 120, 220 auf, der in Funktion, also bei einer Bremsung, gegen die Bremsscheibe 2 gepresst ist.

Die Bremsbeläge 100, 200 sind durch die zentrale Öffnung 1d für einen Wechsel und zur Wartung erreichbar. Sie können "von oben" radial durch diese zentrale Öffnung 1d in zugehörige Belagschächte eingesetzt und wieder daraus entnommen werden. Die Begriffe "oben" und "unten" werden nachfolgend in diesem Sinne verwendet.

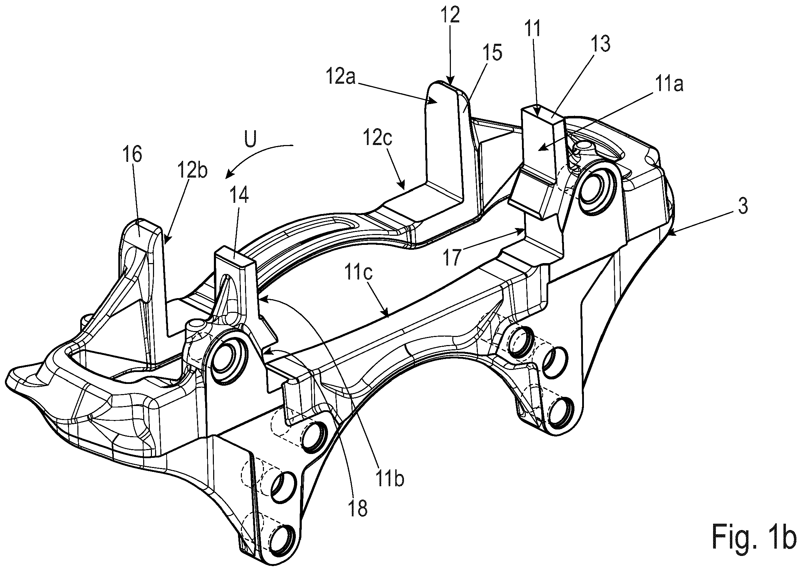

Ein zuspannseitiger Belagschacht 11 für den zuspannseitigen Bremsbelag 100 ist im Bremsträger 3 auf der Seite der Zuspanneinrichtung bzw. in einem zuspannseitigen Abschnitt des Bremsträgers ausgebildet. Dies ist in **Fig. 1b** zu erkennen.

Es ist vorgesehen, dass, dass der Bremsträger 3 rahmenartig einen oberen Randbereich der Bremsscheibe 2 umgreift und einen zuspannseitigen und einen reaktionsseigen Abschnitt aufweist. Dann wird ein zweiter Belagschacht 12 für den reaktionsseitigen Bremsbelag vorzugsweise auch im Bremsträger 6 ausgebildet (auf der Reaktionsseite, siehe **Fig. 1a** und **b).** Der reaktionsseitige Belagschacht 12 für den reaktionsseitigen Bremsbelag 100 kann alternativ aber auch im Bremssattel 1 ausgebildet sein (wenn der Bremsträger nur einen zuspannseitigen Abschnitt aufweist und keinen reaktionsseitigen Abschnitt; hier nicht dargestellt).

Die Belagschächte 11, 12 sind (siehe **Fig. 1a** und **1b**) jeweils seitlich (bzw. in Drehrichtung U und gegen die Drehrichtung U) durch Abstützflächen 11a, 11b; 12a, 12b an Bremsträgerhörnern 13, 14 sowie 15, 16 begrenzt und weisen jeweils einen Belagschachtgrund 11c, 12c auf, der zwischen den Bremsträgerhörnern 13 und 14 bzw. 15 und 16 ausgebildet ist.

Der zuspannseitige Bremsbelag 100 und der reaktionsseitige Bremsbelag 200 sind hier verschieden ausgebildet. Dabei kann der zuspannseitige Bremsbelag 100 wiederum auf verschiedenste Weise ausgebildet werden. Die in Fig. 2 und 3 gewählte Darstellung ist insofern zwar besonders vorteilhaft, aber nicht zwingend.

Der zuspannseitige Bremsbelag 100 der Fig. 2 und 3 (für die Bremse der Fig. 1 und der **Fig. 9** geeignet) weist den Belagträger 110 und das daran einseitig angeordnete Belagmaterial 120 auf, das im eingebauten Zustand zur Bremsscheibe 2 gerichtet ist. Der Belagträger 110 weist wiederum zwei Seitenkanten 111, 112 auf, die parallel zu den zugehörigen Abstützflächen der Bremsträgerhörnern 13, 14 liegen. Bezogen auf die bevorzugte Drehrichtung U (entsprechend einer Vorwärtsfahrt) ist die eine Seitenkante 111 auslaufseitig ausgebildet und dient derart als Abstützfläche bei Bremsungen aus der Vorwärtsfahrtrichtung. Bezogen auf die bevorzugte Drehrichtung U (entsprechend einer Vorwärtsfahrt) ist die weitere Seitenkante 112 einlaufseitig ausgebildet. Sie dient derart als Abstützfläche bei Bremsungen aus der Rückwärtsfahrtrichtung.

An den Seitenkanten 111, 112 - hier an deren im Belagschacht 11 untere Rändern - steht jeweils wenigstens ein Vorsprung 113, 114 in voneinander abgewandten Richtungen nach außen vor. Jeder dieser Vorsprünge 113, 114 greift jeweils in einen zugehörigen Hinterschnitt 17, 18 des Bremsträgers 3 (siehe Fig. 1b) ein, die jeweils in den Bremsträgerhörnern 13, 14 des zuspannseitigen Belagschachtes 11 ausgebildet sind. Derart ist der eingebaute zuspannseitige Bremsbelag 100 im Bremsträger 3 radial gesichert und auch gegen ein Ausdrehen bei Bremsungen gesichert. Die Vorsprünge dienen ferner als weitere Abstützbereiche bei Bremsungen. Beim Wechseln wird der neue Bremsbelag 100 radial eingesetzt und dann axial so verschoben, dass die Vorsprünge 113 und 114 in die Hinterschnitte 17, 18 greifen.

Der zuspannseitige Bremsbelag 100 kann ferner eine Belagfeder 130 aufweisen. Diese untergreift hier mittig einen an dem bzw. mit dem Belagträger 110 einstückig ausgebildeten Haltebügel 115. Die Belagfeder 130 ist derart radial gesichert. Die Belagfeder 130 weist ferner beidseits des Haltebügels jeweils einen Schlitz 131, 132 auf, der von Laschen/Vorsprüngen 116, 117 an der Oberseite des Belagträgers 110 durchsetzt ist. Derart ist die Belagfeder 130 axial und gegen ein Ausdrehen gesichert. Enden 133, 134 der Belagfeder 130 liegen vorzugsweise auf den Bremsträgerhörner 13, 14 federnd auf. Durch die Federvorspannung wird derart der zuspannseitigen Bremsbelag 100 in seinem im Belagschacht 12 im Bremsträger 3 nach oben gezogen.

Derart ist der zuspannseitige Bremsbelag 100 im Bremsträger 3 gut insbesondere radial gesichert und gehalten. Einen am Bremssattel festgelegten Niederhaltebügel benötigt er daher nicht.

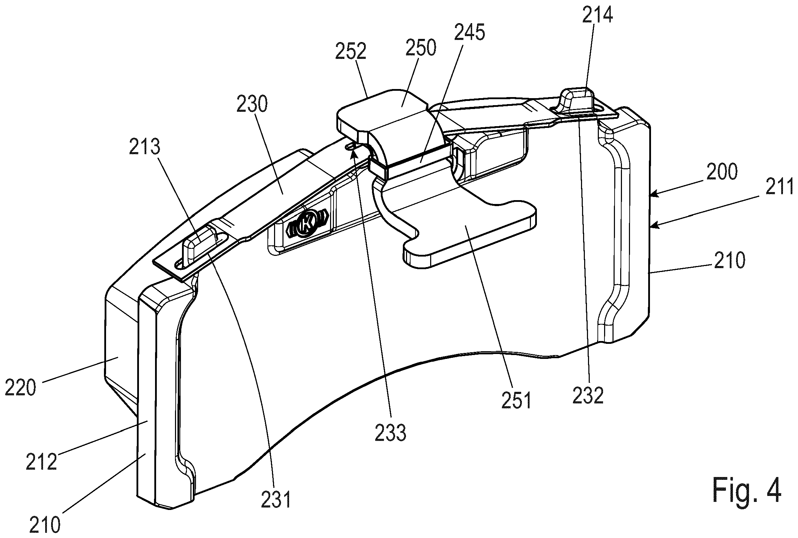

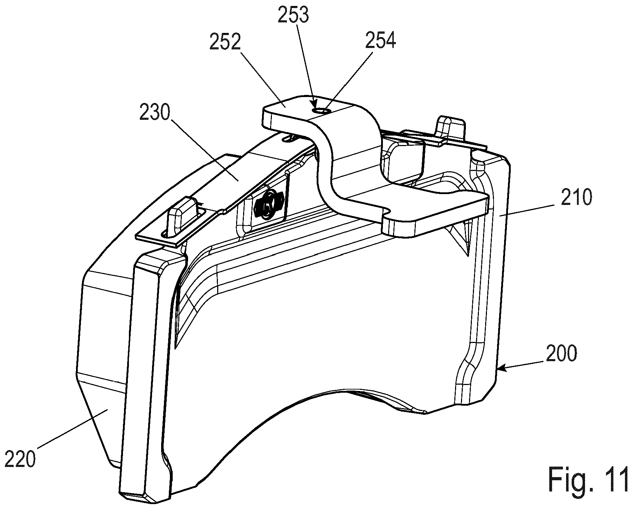

Der reaktionsseitige Bremsbelag 200 der **Fig. 4** oder der **Fig. 11** weist wiederum einen Belagträger 210 auf und das daran einseitig angeordnete Belagmaterial 220, das im eingebauten Zustand zur Bremsscheibe 2 gerichtet ist.

Der Belagträger 210 weist wiederum zwei Seitenkanten 211, 212 auf, die hier parallel ausgerichtet sind und zusätzlich parallel zu den zugehörigen Abstützflächen 12a, b der Bremsträgerhörner 15, 16 des reaktionsseitigen Belagschachtes 12 des Bremsträgers 3 (Fig. 1a) liegen.

Bezogen auf die bevorzugte Drehrichtung U (entsprechend einer Vorwärtsfahrt) ist die eine Seitenkante 211 wiederum auslaufseitig ausgebildet und dient derart als Abstützfläche bei Bremsungen aus der Vorwärtsfahrtrichtung. Bezogen auf die bevorzugte Drehrichtung U (entsprechend einer Vorwärtsfahrt) ist die weitere Seitenkante 212 wiederum einlaufseitig ausgebildet. Sie dient derart primär als Abstützfläche bei Bremsungen aus der Rückwärtsfahrtrichtung.

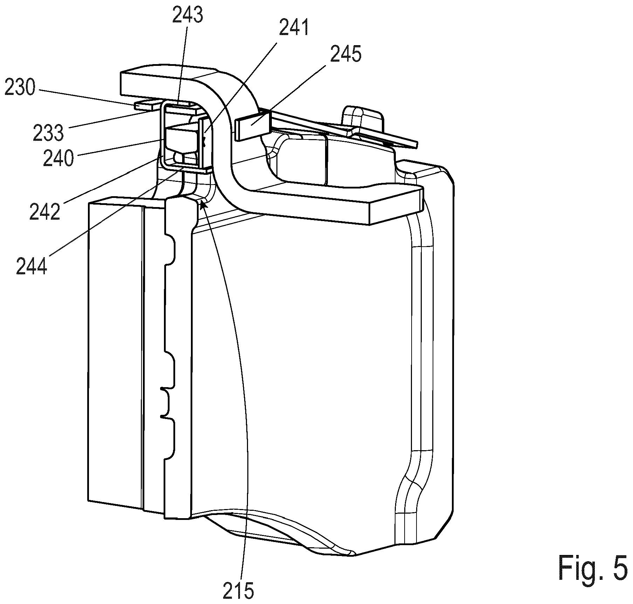

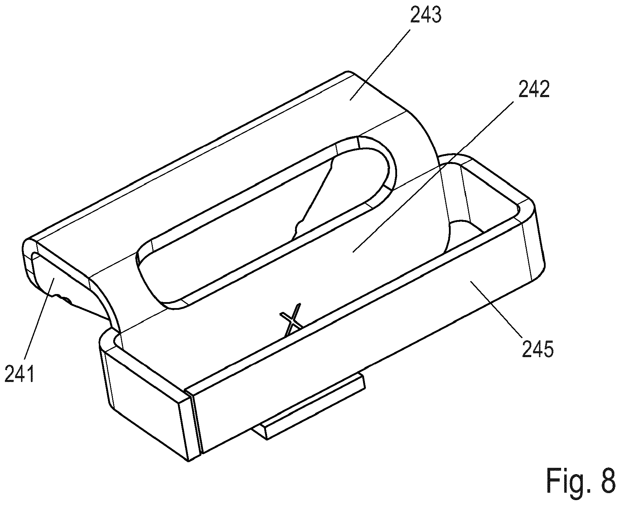

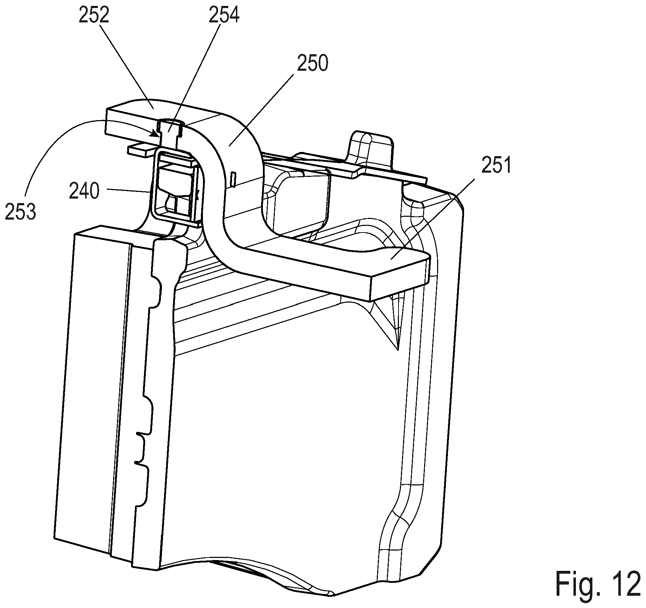

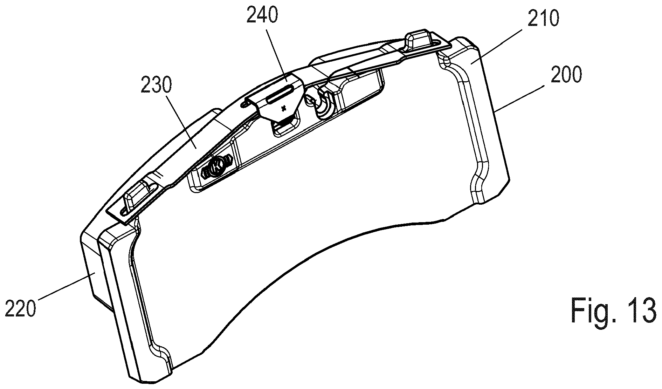

Der reaktionsseitige Bremsbelag 200 weist - siehe **Fig. 4** und **5** sowie **12, 13** und **15** - eine Belagfeder 230 auf. An der oberen Längskante des Belagträgers 210 ist die Belaghaltefeder 230 vorzugsweise mit einer Haube 240 - **Fig. 5****,** **6****,** **8** und **12****,** **13** und **15** - unlösbar befestigt bzw. angeordnet/gehalten. Vorzugsweise ist die Haube 240 begrenzt an dem Belagträger 210 auslenkbar.

An den Seitenkanten 211, 212 - hier an deren im Belagschacht 12 unteren Rändern - des Belagträgers 210 steht jeweils hier kein Vorsprung in voneinander abgewandten Richtungen nach außen vor. Daher ist dieser Bremsbelag derart nicht radial gesichert. Er benötigt daher eine andere Einrichtung zur radialen Sicherung im Belagschacht. Um den reaktionsseitigen Bremsbelag 200 radial in seinem Belagschacht 12 zu sichern, ist (insofern) ein Niederhaltebügel 250 vorgesehen. Dieser kann ein- oder mehrstückig ausgelegt sein.

Der Niederhaltebügel 250 ist an seinem einen Ende 251 am Bremssattel 1 festgelegt, so dass er sich bei Bremsungen nicht von diesem löst. Zum Belagwechsel kann er hingegen vom Bremssattel 1 gelöst werden.

Der Niederhaltebügel 250 ist derart ausgelegt und derart bemessen, dass er lediglich den einen der beiden Bremsbeläge 100, 200 niederhält. Hier ist dies der reaktionsseitige Bremsbelag 220, den er niederhält, nicht aber der zuspannseitigen Bremsbelag 100, den er nicht radial sichert bzw. niederhält.

Der Niederhaltebügel 20 ist vorzugsweise senkrecht zu seiner Axialrichtung ein eher flaches Bauteil. Dies ist vorteilhaft aber nicht zwingend. Es ergibt sich aber eine platzsparende Ausgestaltung. Der Querschnitt des Niederhaltebügels 250 kann vorzugsweise rechteckig sein mit zwei parallelen Schmalseiten und zwei parallelen Langseiten.

Derart wirkt dieser Niederhaltebügel 250 mit dem Bremsbelag 220 zusammen. Der Bremsbelag 220 ist dazu ausgelegt, von diesem Niederhaltebügel 250 direkt oder über eines oder mehrere zwischengeschaltete Elemente niedergehalten zu werden. Er erstreckt sich vom Bremssattelrücken 1b aus parallel zur Bremsscheibenachse in die Sattelöffnung 1d, in welche er vorsteht, die er aber nicht vollständig überbrückt. Sein vom Bremssattel 1 abgewandtes Ende 252 übergreift den Belagträger 210 des reaktionsseitigen Bremsbelages 200. Dieses Ende 252 übergreift aber vorzugsweise nicht auch die Bremsscheibe 2 und weiter vorzugsweise nicht auch den zuspannseitigen Bremsbelag 100 (siehe Fig. **1** und **9**).

Zudem wird auch die Sattelöffnung 1d nicht in axialer Richtung (parallel zur Bremsscheibe) vollständig übergriffen. Daher ist dieser Niederhaltebügel 250 konstruktiv einfach und dennoch sehr sicher. Er muss nur an einem Rand der Öffnung 1d am Bremssattel 1 befestigt werden, vorzugsweise an dem Sattelrücken 1b.

Vorzugsweise übergreift das vom Bremssattel 1 abgewandte Ende 252 des Niederhaltebügels 250 zumindest den Belagträger 210 des reaktionsseitigen Bremsbelages 200. Es übergreift ferner vorzugsweise auch axial ausgehend vom Bremssattel 1 die Haube 240, welche von der Belagfeder 230 oder einem Teil der Belagfeder 230 durchsetzt ist.

Nach einer Variante ist es vorteilhaft, wenn der Niederhaltebügel 250 den reaktionsseitigen Bremsbelag 200 nur axial übergreift und derart radial sichert, aber nicht an dem Bremsbelag 200 befestigt ist. Derart wird eine gute radiale Sicherung des reaktionsseitigen Bremsbelages 200 erreicht.

Nach einer weiteren Variante ist es hingegen vorteilhaft, wenn der Niederhaltebügel 250 an dem reaktionsseitigen Bremsbelag 200 auch befestigt ist. Derart wird eine einfach handhabbare Montageeinheit gebildet, die den Belagwechsel erleichtert.

Nach einer Weiterbildung dieser Variante ist es vorteilhaft, wenn der Niederhaltebügel 250 an dem reaktionsseitigen Bremsbelag 200 unlösbar befestigt ist.

Derart wird einerseits eine einfach handhabbare Montageeinheit gebildet und andererseits sichergestellt, dass bei einem Belagwechsel auch sicher der (infolge vieler Bremsungen stark belastete) Niederhaltebügel 250 mit ausgetauscht wird.

Zum Lösen wird lediglich die Fixierung des Niederhaltebügels 250 am Bremssattel 1 gelöst. Dann wird der reaktionsseitige Bremsbelag 200 mitsamt dem Niederhaltebügel 250 als Baueinheit gewechselt. Vorzugsweise umfasst diese Baueinheit vorteilhaft auch die Belagfeder 230. Und weiter vorzugsweise umfasst diese Baueinheit vorteilhaft auch die Haube 240.

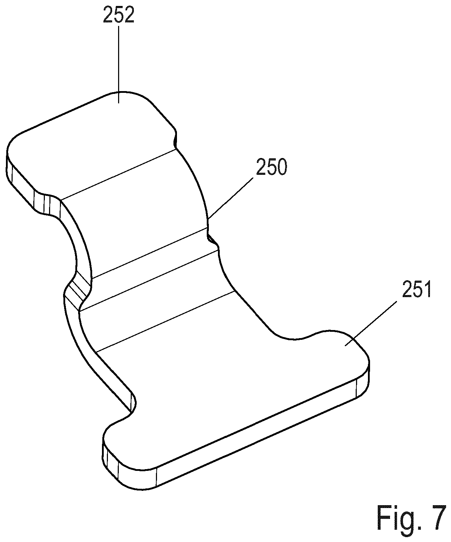

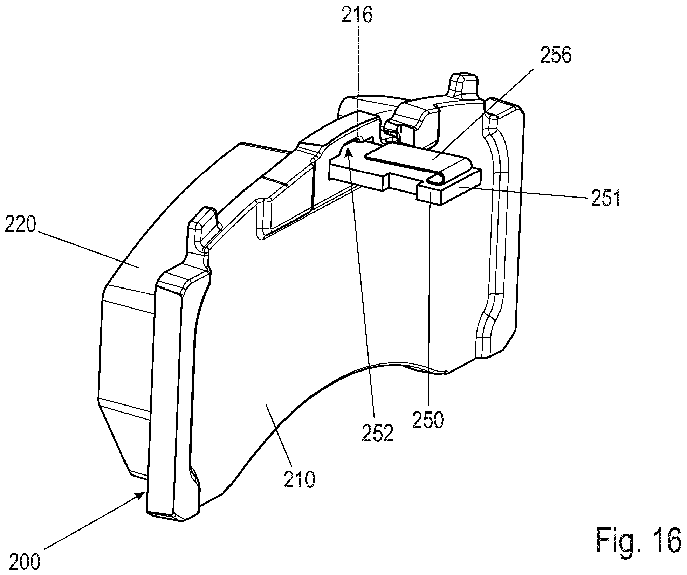

Das Befestigen des Niederhaltebügels 250 an dem reaktionsseitigen Bremsbelag 220 kann auf verschiedene Weise erfolgen, so durch eine formschlüssige oder stoffschlüssige Verbindung mit einem Teil des reaktionsseitigen Bremsbelages 220. Als dieses Teil bietet sich nach einer Variante - siehe Fig. 16 - der Belagträger 210 an oder es bietet sich die Belagfeder 230 an (jeweils nicht dargestellt). Und als dieses Teil bietet sich - wenn vorhanden - auch die Haube 240 an. Diese vorteilhafte Variante ist in den Zeichnungen Fig. 1 bis 15 realisiert worden.

Der Niederhaltebügel 250 kann mit der Haube 240 stoffschlüssig verbunden, so beispielsweise mit dieser direkt oder indirekt (über ein Zwischenteil wie einen Bolzen) verschweißt oder verlötet sein. Der Niederhaltebügel 250 kann auch an die Haube 240 angeschraubt sein oder an der Haube 240 mit einem Niet befestigt sein (nicht dargestellt).

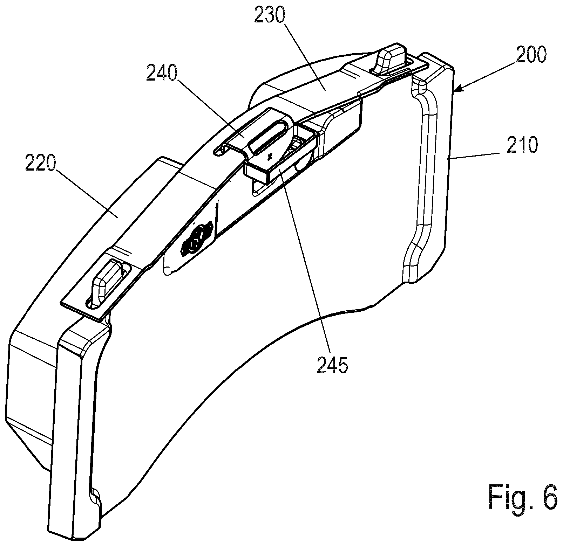

Alternativ ist es auch vorteilhaft, wenn die Haube 240 ein einstückig angeformtes Teil wie einen Arm oder mehrere Arm oder sogar einen umfangsgeschlossenen Ring 245 **(****Fig. 6****)** aufweist, welche/welcher vorzugsweise einstückig mit ihr ausgebildet ist/sind und mit welchen der Niederhaltebügel 250 unlösbar an die Haube 240 angebunden wird. Der Ring 245 wird vorzugsweise von dem Niederhaltebügel 250 durchsetzt **(****Fig. 4****).** Ergänzend kann der Niederhaltebügel 250 an dem Ring 245 stoffschlüssig z.B. schweißend festgelegt sein.

In einer Seitenansicht (siehe z.B. **Fig. 4**) kann der Niederhaltebügel 250 gestuft ausgebildet sein. Dies dient u.a. dazu, um einen Höhenversatz zum Bremssattel 1 auszugleichen. Diese Z-Form kann zudem auch für ein einfaches und unkompliziertes Festlegen des Niederhaltebügels 250 an dem Bremssattel 1 genutzt werden.

Das eine Ende des Niederhaltebügels 250, welches an dem Bremssattel 1 befestigt ist, kann dort auf verschiedenste Weise festgelegt sein. Vorteilhaft ist, dieses Ende mit einem Stift 255 **(****Fig. 1a****,** **Fig. 9****)** am Bremssattel 1 formschlüssig zu fixieren. Dazu durchsetzt der Stift 255 Öffnungen 1e, die hier Bohrungen sind, in zwei beabstandeten Laschen 1f am Bremssattel 1 und übergreift den Niederhaltebügel 250, dessen Ende 251 am Bremssattel 1 zwischen den Laschen 1f liegt. Eine hier T-förmige Ausgestaltung des Endes 251 stellt sicher, dass der Niederhaltebügel 250 nicht in axialer Richtung durch die Laschen 1f rutschen kann.

An den beiden Enden der Belaghaltefeder 230 - siehe wieder **Fig. 4** - sind Schlitze 231, 232 vorgesehen, die von an den Belagträger 210 angeformten Laschen oder Vorsprüngen 213, 214 an der Oberseite des Belagträgers 210 durchsetzt sind.

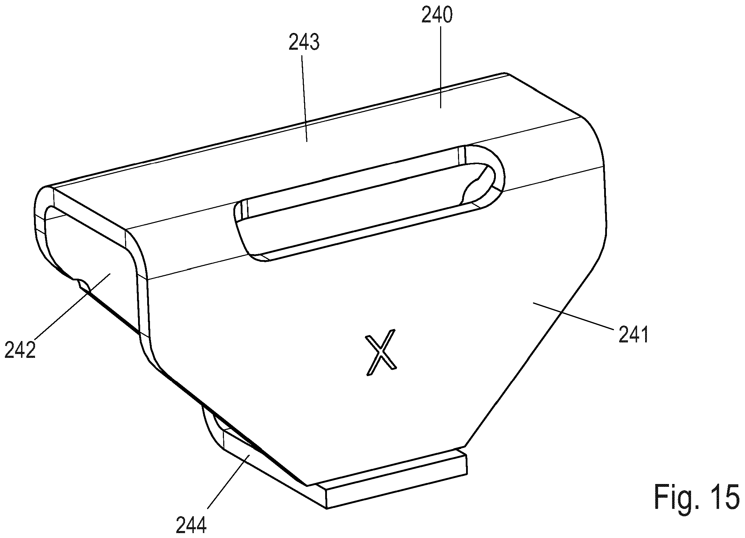

Zur vorzugsweise unlösbaren Verbindung der Belaghaltefeder 230 mit dem Belagträger 210 ist die Haube 240 vorgesehen, die, wie insbesondere in Fig. **4** und auch **Fig. 15** zu sehen, vorzugsweise einen im Querschnitt nahezu rechteckigen Querschnitt aufweist, mit zwei parallelen Schenkeln 241, 242, die durch einen Steg 243 oberhalb des Belagträgers 210 und einen weiteren Steg 244 (der eine Öffnung des Belagträgers 210 durchsetzt) miteinander verbunden sind.

Etwa mittig zwischen den Schlitzen 231, 232 ist in die Belaghaltefeder 3 ein Längsschlitz 233 eingebracht, durch den der eine der Schenkel 242 der Haube 240 gesteckt ist, der ebenso wie der gegenüberliegende Schenkel 241 an einer zugeordneten Breitseite des Belagträgers 210 anliegt oder nahezu anliegt.

Wie in der **Fig. 5** weiter deutlich erkennbar ist, ist die Belaghaltefeder 230 vorzugsweise breiter bzw. dicker als die axiale Dicke des Belagträgers 210, so dass die Belaghaltefeder 230 in Richtung des Reibbelages 220 übersteht, während ihre andere Längskante etwa mit der Rückseite des Belagträgers 210 fluchtet. In der Fig. 5 ist auch zu erkennen, dass sich an den Schenkel 241 unten der Verbindungssteg 244 anschließt, der parallel zum Steg 243 verläuft.

Durch eine vorzugsweise stoffschlüssige Verbindung ist ein zerstörungsfreies Lösen der Haube 240 ausgeschlossen, wodurch eine sichere Befestigung der Belaghaltefeder 230 gewährleistet ist. Die Haube 240 kann dazu auch stoffschlüssig an der Belaghaltefeder 230 oder dem Belagträger 210 befestigt sein.

Im Übrigen sind die Schenkel 241, 242 in ihrem Grundriss hier vorzugsweise trapezförmig gestaltet, wobei die Breitseite durch den Steg 243 gebildet wird, während der Verbindungsteg 244, welcher hier das Durchgangsloch 215 in dem Belagträger 210 verschieblich durchsetzt, die schmalere Seite definiert. Wie bereits ausgeführt, ist der Längsschlitz 233, bezogen auf die Längserstreckung der Belaghaltefeder 230, vorzugsweise etwa mittig angeordnet. Ganz besonders bevorzugt ist er genau mittig angeordnet (siehe auch zum Hintergrund die Patente EP 1 963 702 B1 und der EP 2 255 101 B1).

Vorzugsweise ist die Haube 240 an dem Belagträger 210 begrenzt radial auslenkbar. Dazu durchsetzt die Haube 240 mit dem Steg 244 das Durchgangsloch 215.

Da der reaktionsseitige Bremsbelag 220 seine Position im Bremssattel 1 auch mit zunehmendem Verschleiß nicht verändert, ist es möglich, den Niederhaltebügel 250 direkt als Baueinheit mit dem reaktionsseitigen Bremsbelag 200 auszubilden. Hierzu bietet sich die Haube 240 besonders an, die derart um eine weitere, bisher nicht bekannte Funktion - die Fixierung des Niederhaltebügels - erweitert wird (so in Figur 4, 11 sowie 5 und 12). Derart wird ein besonders vorteilhafter reaktionsseitiger Bremsbelag 200 geschaffen, der einen kurzen und vorteilhaft auf die Funktion des Niederhaltens dieses einen Bremsbelages beschränkte Bauform aufweisenden Niederhaltebügel 250 als vorzugsweise integrierten Bestandteil aufweist. Zu nennende Vorteile sind auch die einfache Montage, reduzierte Herstellkosten, kleinere Belastungen und eine Gewährleistung eines korrekten Einbaus.

Vorteilhaft ist daher die Ausgestaltung des Niederhaltebügels 250 mit diesem Bremsbelag als Baueinheit, die als Ganzes beim Belagwechsel ausgetaucht wird. Dies ist einfach und führt zu einer Erneuerung aller zu wechselnden Elemente an der Baueinheit "reaktionsseitiger Belag" (Bremsbelag, Belagfeder, wenn vorhanden: Haube und Niederhaltebügel).

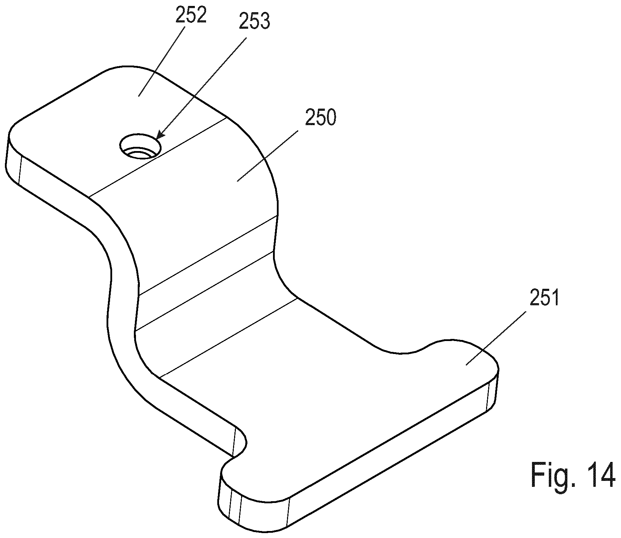

Während nach **Fig. 2 bis 8** der Niederhaltebügel 250 den Ring 245 der Haube 240 durchsetzt, an dem er vorzugsweise auch stoffschlüssig festgesetzt ist, ist nach **Fig. 9 bis 15** vorgesehen, einen Stift (Bundbolzen, Kopfbolzen oder dgl.) 254 zur Befestigung des Niederhaltebügels 250 an der Haube 240 und damit an dem Bremsbelag 200 zu nutzen. Der Stift 250 durchsetzt den Niederhaltebügel im Bereich einer Bohrung 253 (Fig. 14) radial und ist beispielsweise an die Haube 240 angeschweißt oder dort in anderer Weise befestigt (z.B. durch Nieten, Pressen usw.). Der Ring 245 kann aus Laschen der Haube 240 gebildet sein und umfangsgeschlossen oder nicht umfangsgeschlossen ausgebildet sein.

Der Niederhaltebügel 250 kann auch direkt an der Belagfeder 230 oder an dem Belagträger 210 angeordnet werden (die letztgenannte Variante ist beispielhaft in Fig. 16 dargestellt).

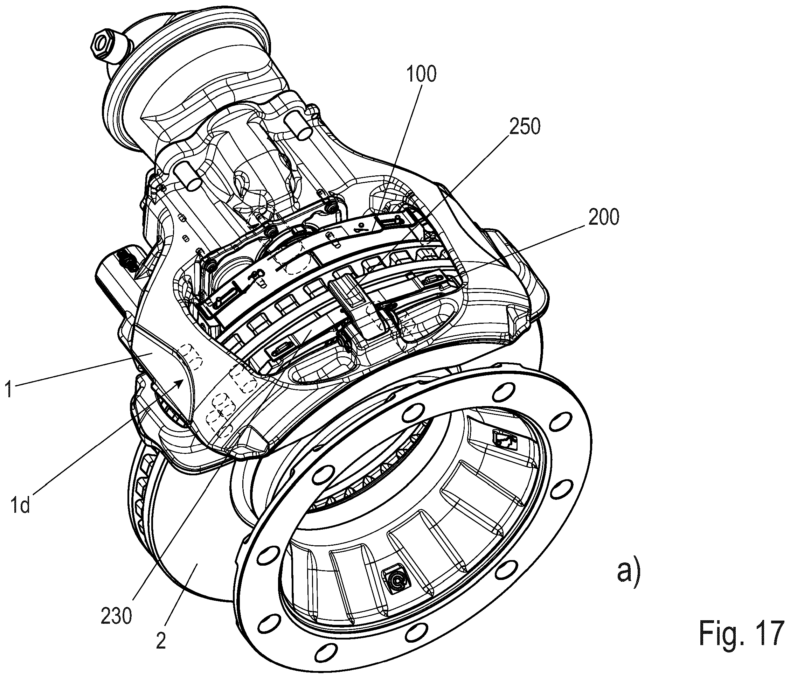

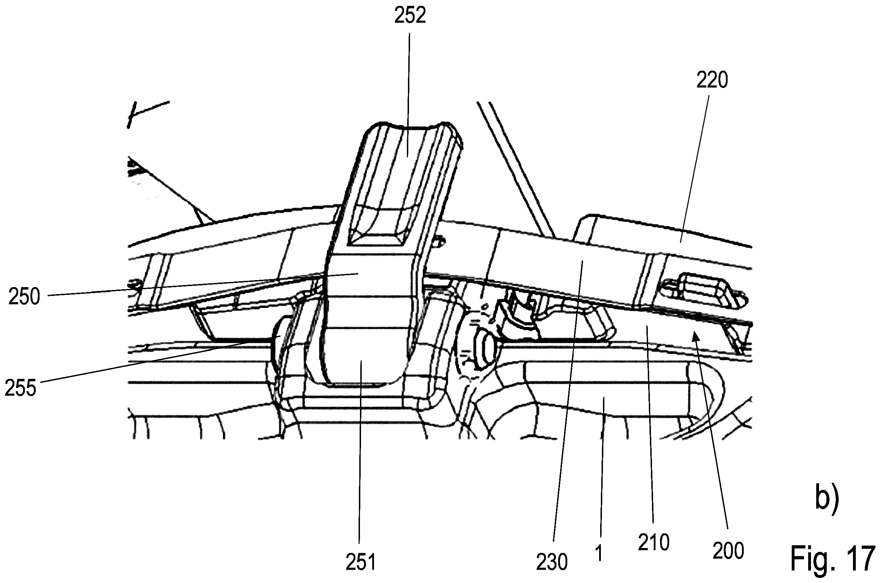

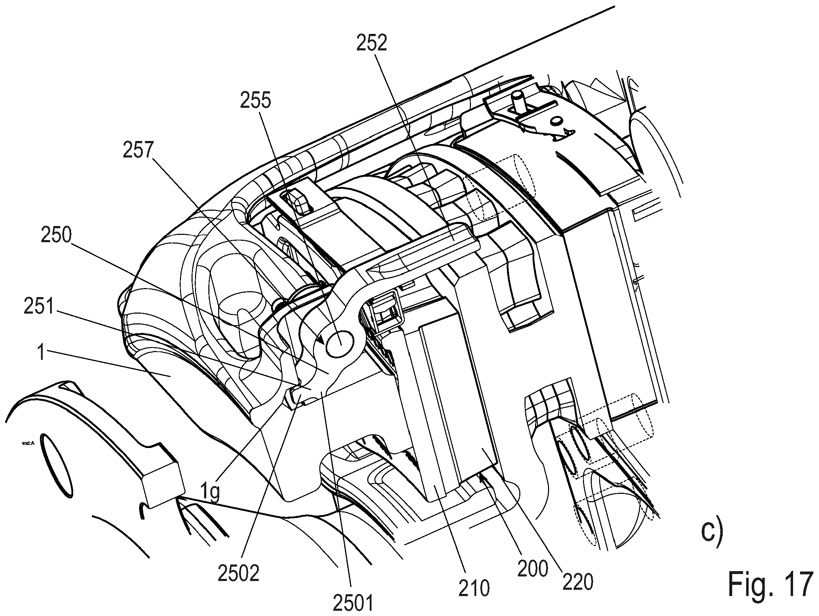

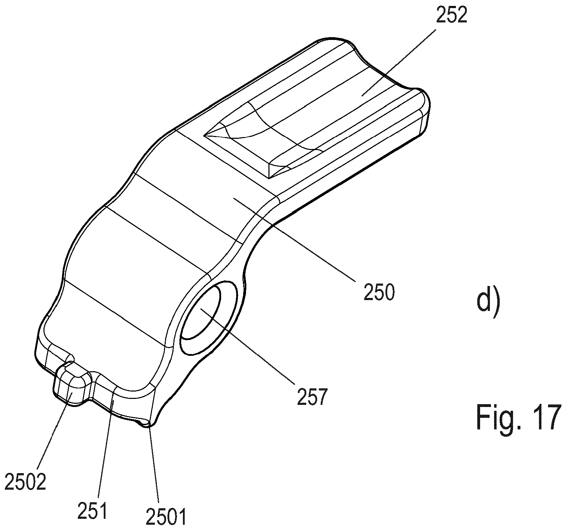

Der Belagträger 210 weist nach Fig. 16 eine Öffnung 216 auf, in welche das zum Belagträger 210 weisende Ende 252 (dies bedeutet auch "ein näher zum Belagträger 210 liegender Abschnitt") des Niederhaltebügels 250 eingreift. Die Öffnung 216 kann sacklochartig ausgestaltet sein oder als Durchgangsöffnung. Das andere Ende 251 des Niederhaltebügels 250 (bzw. ein näher zum Bremssattel 1 liegender Bereich) kann an/in der Öffnung 1d (vorzugsweise unlösbar) form- und/oder stoffschlüssig festgelegt sein. Das näher zum Bremssattel 1 liegende Ende 251 des Niederhaltebügels 250 weist zum Bremssattel 1 und wird dort (vorzugsweise lösbar) form- und/oder stoffschlüssig (in hier nicht dargestellter Weise, z.B. ähnlich zu Fig. 1a oder 17 festgelegt. Ergänzend kann eine Feder 256 an dem Niederhaltebügel 250 vorgesehen sein, welche für eine federnde Abstützung dieses Bremsbelages 210 relativ zu einem Widerlager wie dem Bremssattel 1 nutzbar ist (hier nicht dargestellt).

Der Niederhaltebügel 250 kann derart die Belagrückenplatte bzw. den Belagträger 210 ganz oder teilweise durchgreifen. Anschließend wird auf dem Niederhaltebügel die Feder 256 befestigt. Derart ist der Niederhaltebügel - wie oben bereits erwähnt - nebst Feder 256 unverlierbar mit dem reaktionsseitigen Bremsbelag 200 verbunden. Die Belaghaltefeder wird derart vom Bremsbelag 200 weg verlagert bzw. axial beabstandet. Dies bietet die eingangs hierzu beschriebenen Vorteile.

Nach **Fig. 17a****,** **17b****,** **17c** **und** **17d** weist der Niederhaltebügel 250 eine Durchgangsöffnung 257 (z.B. eine Bohrung) vorzugsweise parallel zur Bremsscheibe 2 auf, um das eine Ende 251 des Niederhaltebügels 250, welches an dem Bremssattel 1 befestigt ist, dort mit einem/dem Bolzen bzw. Stift 255 zu halten, der hier parallel zur Ebene der Bremsscheibe 2 verläuft. Dazu durchsetzt der Bolzen bzw. Stift 255 die Durchgangsöffnung 257 und die Laschen 1f am Bremssattel 1. Der Bolzen bzw. Stift 255 hat an einem Ende einen Kopf 255a außerhalb der beiden Laschen 1f und wird mit einem Sicherungselement 260 (hier Scheibe und Splint) an seinem anderen Ende gesichert. Ein Formschlussmittel wie ein Vorsprung 258 unten am Belaghaltebügel an dem anderen Ende 252 des Niederhaltebügels am Belagträger 210 oder an der Belagfeder 230 wirkt formschlüssig mit einem korrespondierenden Formschlussmittel an dem Belagträger 210 zusammen, so dass der Bremsbelag axial und radial fixiert ist. Das Ende 251 des Niederhaltebügels 250, welches an dem Bremssattel 1 befestigt ist, greift zudem axial in eine Ausnehmung 1g des Bremssattels 1, die den Niederhaltebügel 250 zusätzlich am Bremssattel sichert.

Eine Kontur 2502 (eine Art Vorsprung) am Ende 251 des Niederhaltebügels 250 am Bremssattel 1 begrenzt das Verdrehen des hier vorzugsweise nicht mit dem Bremsbelag 200 verbunden Niederhaltebügels 250 und gewährleistet das Einhalten einer vorgegebenen Hüllkontur der Bremse. Bei den vorgenannten Varianten wird dies ebenfalls durch das Ende 251 des Niederhaltebügels 250 am Bremssattel 1 realisiert. Eine weitere Kontur 2501 (ein Vorsprung nach unten) am Niederhaltebügel, welche in die Ausnehmung 1g eingeschoben wird, erleichtert die Montage des Niederhaltebügels 250, welcher gegen eine Belagfeder 230 gedrückt werden muss, um den Bolzen 255 einzuführen.

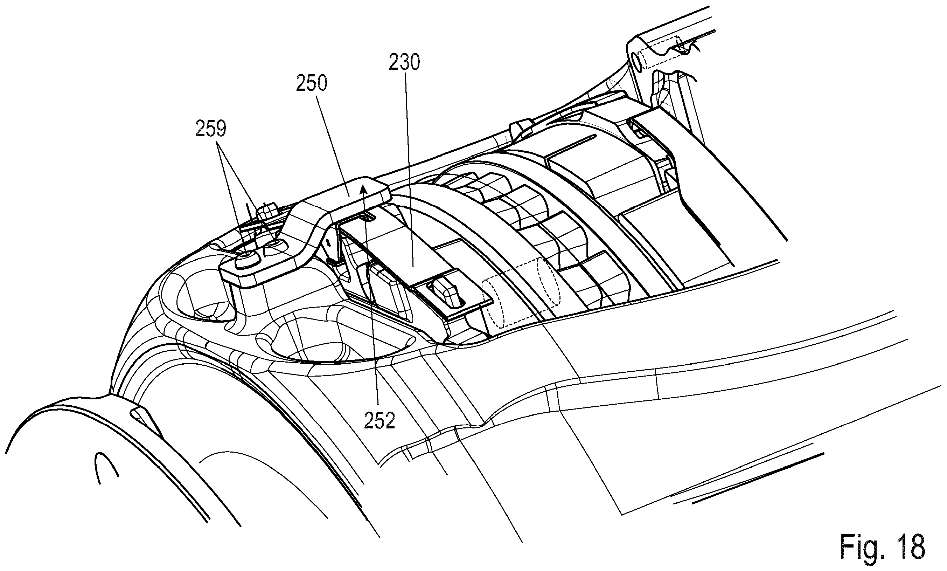

Nach **Fig. 18** wird der Niederhaltebügel 250 am Bremssattel 1 in einfacher Weise mit einer oder mehreren Schrauben 259 lösbar befestigt, die in den Bremssattel 1 eingeschraubt sind, z.B. in hier radialer Richtung.

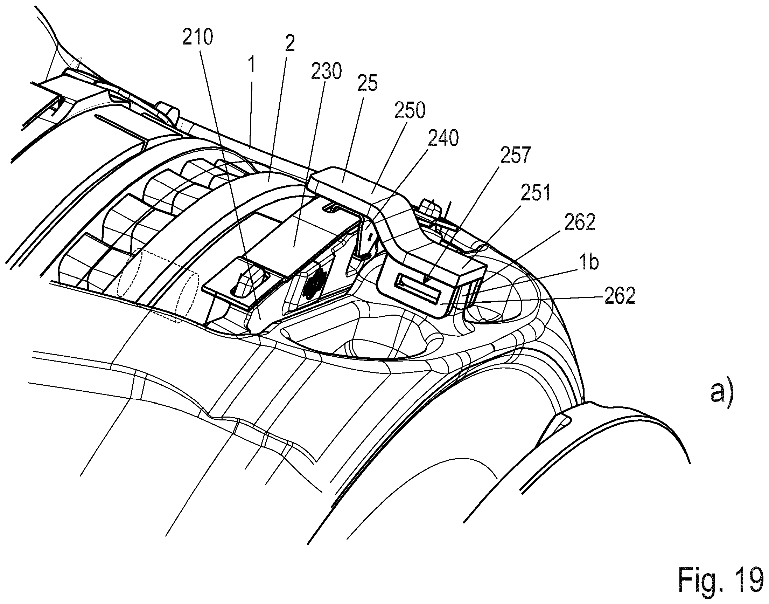

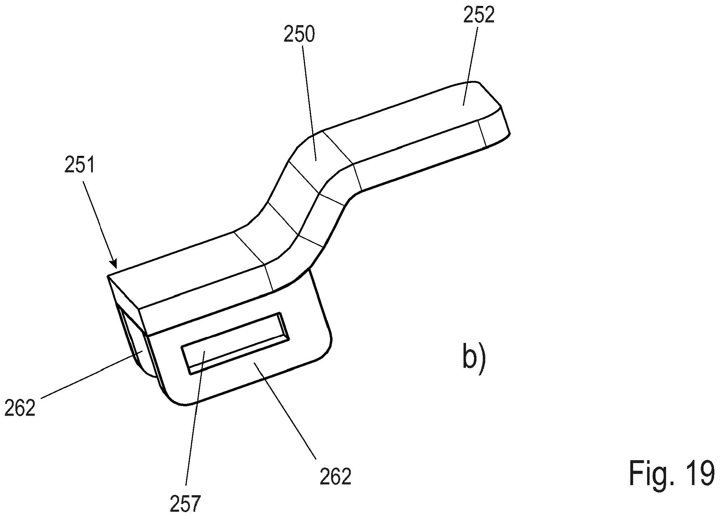

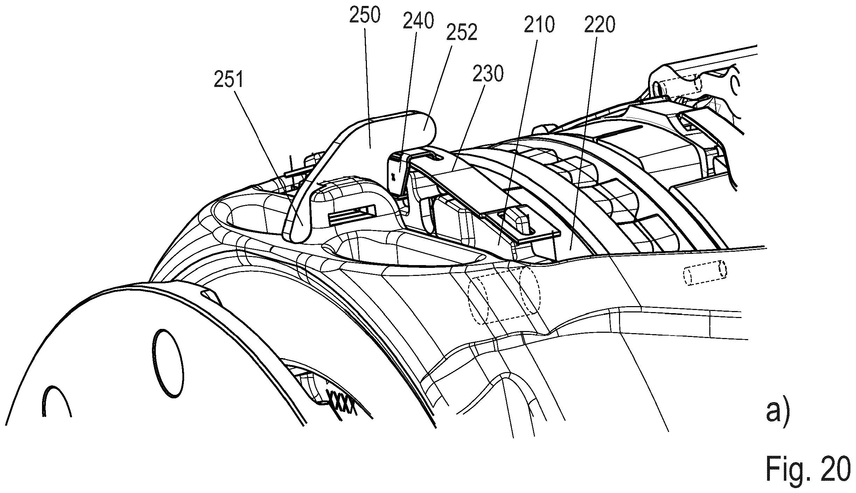

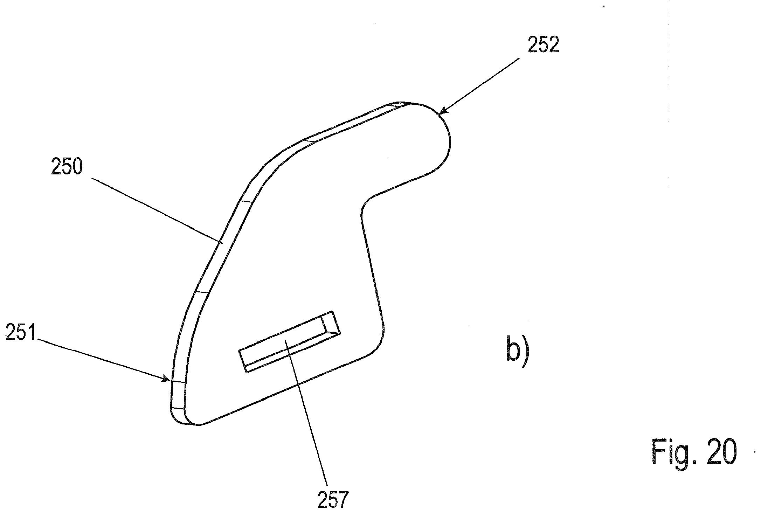

Eine bzw. die Durchgangsöffnung 257 oder die Durchgangsöffnungen 257 für den Bolzen bzw. Stift 255 zum Befestigen bzw. Halten des Niederhaltebügels 250 kann einen runden Querschnitt aufweisen oder einen anderen, so einen eckigen (dargestellt in **Fig. 19a****,** **Fig. 19b****;** **Fig. 20a****,** **Fig. 20 b)****.** Der Stift kann dazu passend die Form eines Rundstiftes bzw. eines Flachsteges aufweisen (hier nicht dargestellt, der an einem Ende auch gebogen ausgebildet sein kann bzw. eine Abwinklung aufweisen kann oder einen vergrößerten Kopf, so dass er einseitig an der Durchgangsöffnung anliegt und nicht durch diese durchrutschen kann). Auf der anderen Seite der Durchgangsöffnung kann er mit einem Splint oder einer Mutter auf einem Gewindeabschnitt oder mit einem anderen geeigneten Mittel gesichert werden. Der Stift 255 in Form des Flachsteges wird durch eine oder mehrere Durchgangsöffnung(en) 257 des Niederhaltebügels 250 und eine oder mehrere entsprechende Durchgangsöffnung(en) der Lasche oder Laschen 1f am Bremssattel 1 gesteckt und fixiert. Derart wird auch eine Verdrehsicherung für den Niederhaltebügel 250 realisiert.

Der Niederhaltebüg el 250 kann auf verschiedene Weise hergestellt werden. Er kann als Stanz-/Biegeteil (siehe z.B. **Fig. 19a** (als flach auf dem Bremsbelag 200 aufliegender Flachsteg mit zwei Laschen 261) oder **Fig. 20a** (als senkrecht auf dem Bremsbelag 200 aufliegender Flachsteg)) ausgebildet sein oder beispielsweise als gegossenes Teil oder als ein auf andere Weise hergestelltes Teil.

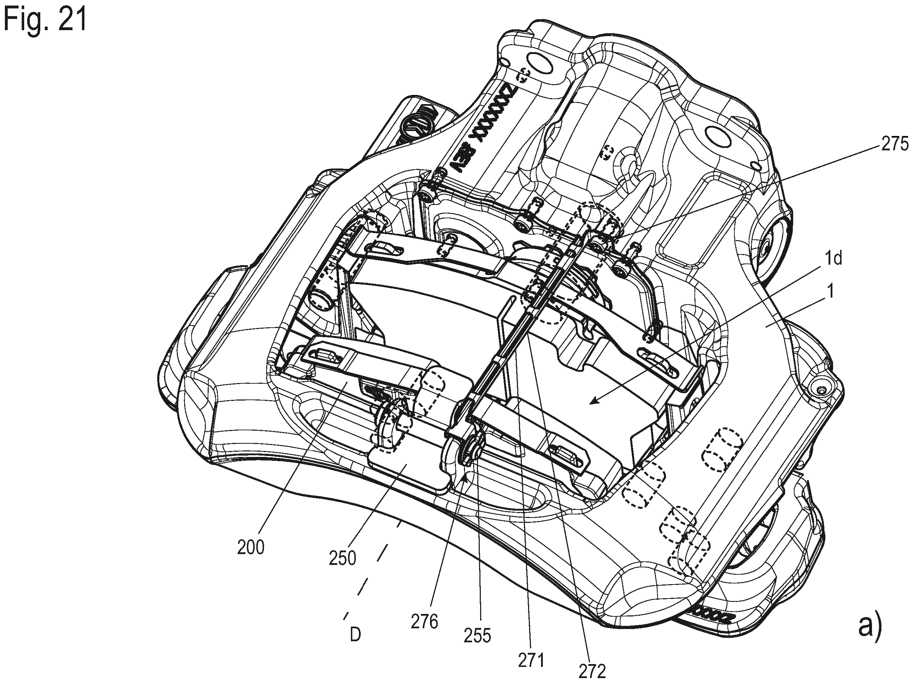

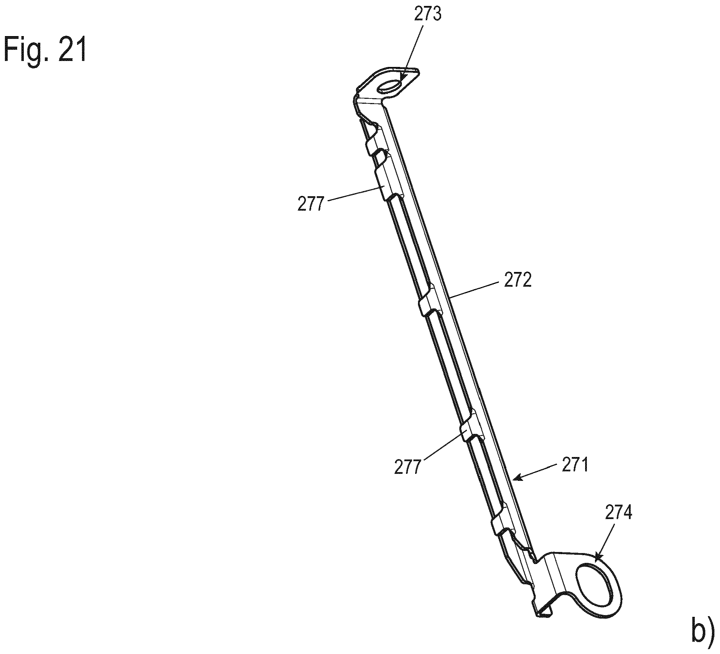

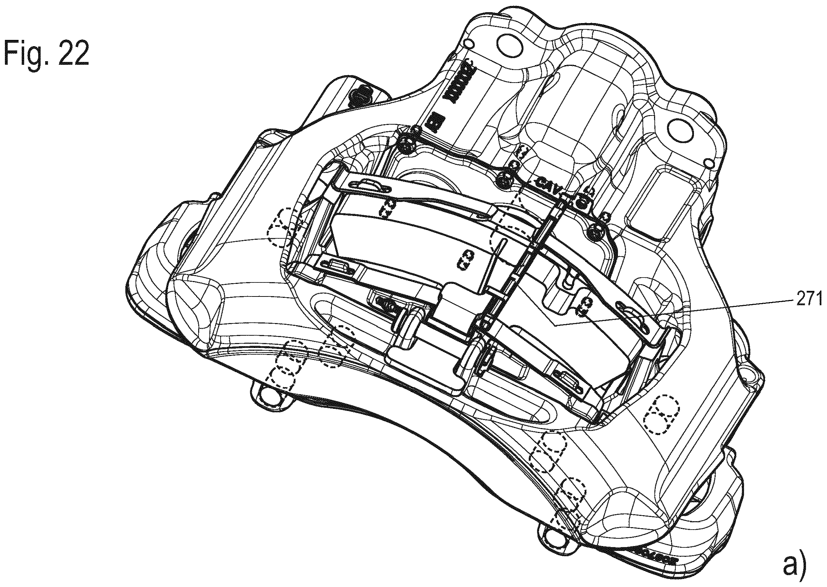

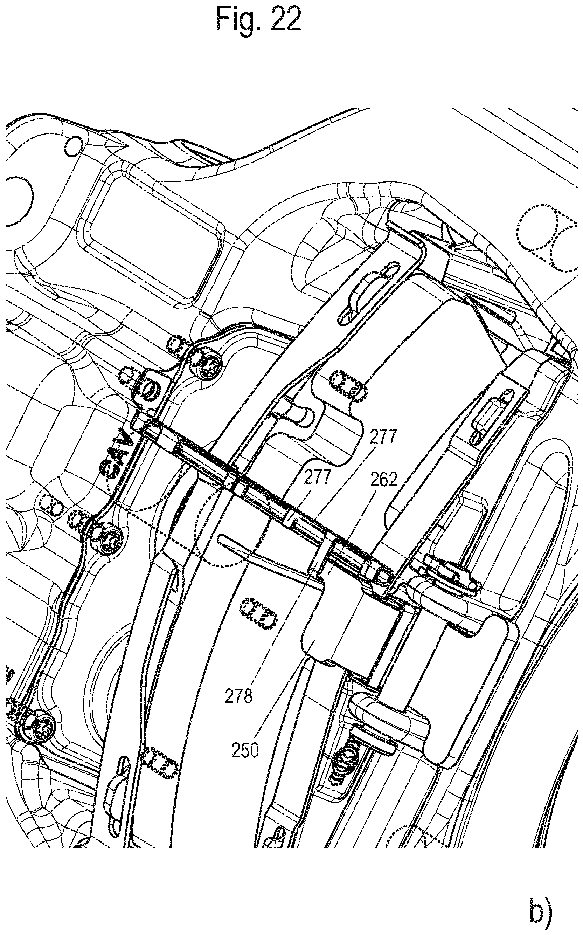

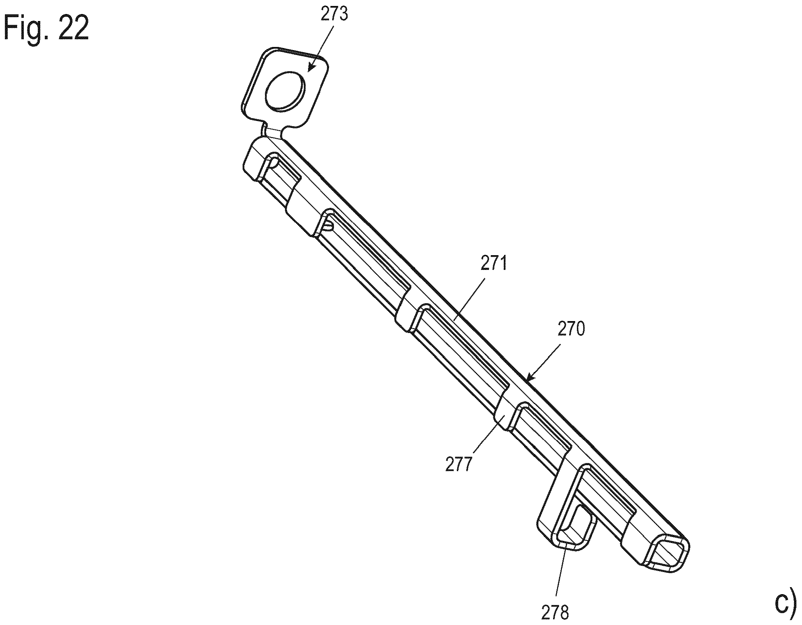

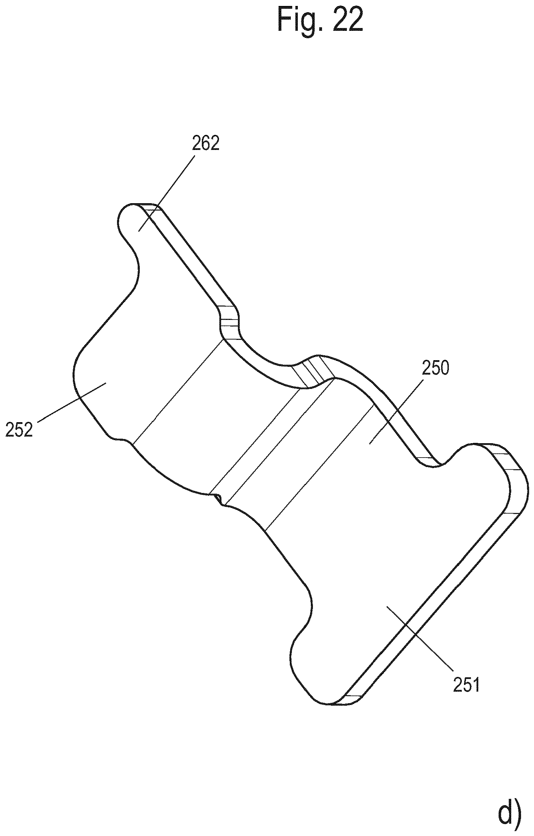

Nachfolgend werden die Ausführungsbeispiele der **Fig. 21a****,** **b** **und** **22 a-c** näher betrachtet.

Zur Verschleißerkennung eines infolge von Bremsungen auftretenden Verschleißes der Bremsbeläge bzw. derer Reibbeläge 220 ist in diese jeweils ein Verschleißsensor (hier nicht dargestellt) integriert. Mit den Verschleißsensoren ist jeweils ein Signalkabel (hier nicht dargestellt) verbunden. Dieses weist wenigstens einen Leiter auf, vorzugsweise wenigstens einen elektrischen Leiter. Der wenigstens eine Leiter kann von einer Isolierung und/oder einem Kabelmantel umgeben sein.

Wenigstens eines der Signalkabel ist, die Öffnung 1d des Bremssattels 1 vollständig überquerend, verlegt und - (hier nicht zu erkennen) zu einer Bremsbelagverschleiß- Ermittlungs- und ggf. Anzeigeeinrichtung der Scheibenbremse geführt. Dazu ist das Signalkabel an einer Kabelbrücke 271 angeordnet und gehalten. Die Kabelbrücke 271 brückt bzw. übersetzt die Öffnung 1d des Bremssattels 1 vollständig. Vorzugsweise brückt sie die Öffnung 1d in axialer Richtung parallel oder im Wesentlichen parallel zur Bremscheibendrehachse bzw. -achse vollständig.

Die Kabelbrücke 271 kann aus Metall bestehen. Sie kann zudem vorteilhaft einfach als ein Stanz-/Biegeteil aus einem Metallblech ausgebildet sein. Sie kann aber auch aus einem anderen Material bestehen.

Die Kabelbrücke 271 weist vorzugsweise einen mittleren Stegabschnitt 272 auf. Dieser Stegabschnitt 272 ist hier gerade ausgestaltet. Er erstreckt sich hier im eingebauten Zustand parallel zur oder im Wesentlichen parallel zur Bremsscheibendrehachse D.

Der Stegabschnitt 272 weist vorzugsweise an seinen beiden voneinander abgewandten Enden erste und zweite Befestigungsmittel 273 und 274 auf. Diese ersten und zweiten Befestigungsmittel 273 und 274 des Kabelhalters bzw. der Kabelbrücke 271 271 dienen zur Befestigung des Kabelhalters 271 an korrespondierenden ersten und zweiten Gegenbefestigungsmitteln 275, 276 des Bremssattels 1 - Fig. 21 - oder eines am Bremssattel 1 befestigten Elementes - Fig. 22.

Die ersten und zweiten Befestigungsmittel 273 und 274 des Kabelhalters bzw. der Kabelbrücke 271 und die korrespondierenden ersten und zweiten Gegenbefestigungsmittel 275, 276 des Bremssattels 1 können auf einer Seite der Öffnung 1d eine weitestgehend toleranzfreie erste Befestigung bzw. auf der anderen Seite der Öffnung 1d des Bremssattels 1 eine toleranzausgleichend wirkende zweite Befestigung ausgebildet sein.

Dazu können die ersten und zweiten Befestigungsmittel 273, 274 nach einer - konstruktiv baulich einfach realisierbaren - Variante als ein Kreisloch 273 und ein Langloch 274 an bzw. in den gegenüberliegenden Enden des Kabelhalters 271 ausgebildet sein. Die korrespondierenden Gegenbefestigungsmittel 275, 276 können dann beispielsweise vorteilhaft und einfach als Schrauben 275, 276 oder Stifte oder dgl. des Bremssattels 1 ausgebildet sein, die am Bremssattel 1 festgelegt sind, beispielsweise in Bohrungen des Bremssattels 1 festgeschraubt sind.

Wenn das eine Ende des Niederhaltebügels 250, welches an dem Bremssattel 1 befestigt ist, mit einem Stift 255 **(****Fig. 1a****,** **Fig. 9****;** **Fig. 21****)** am Bremssattel 1 formschlüssig fixiert ist, kann dieser am Bremssattel 1 festgelegte Stift 255 die Bohrung 276 - vorzugsweise das Langloch zum Toleranzausgleich - durchsetzen. Das Langloch 276 kann sich dann auf dem Stift verschieben. Das Ende des Niederhaltebügels 250 mit der Bohrung 276 ist dann wie eine Unterlegscheibe zwischen einem Kopf des Stiftes 255 und einer Anlagefläche des Bremssattels 1 angeordnet. Diese Befestigungsvariante ist konstruktiv einfach und kostengünstig, da ein einziges Befestigungsmittel - der Stift 255 - doppelt genutzt wird.

Der Querschnitt des Stegabschnittes 272 des Kabelhalters 271 ist nach einer bevorzugten Ausführung vorzugsweise U-förmig. Dabei ist die geschlossene Seite des U vorzugsweise zu den Bremsbelägen 100, 200 hin gewandt, um derart eine Schirmung gegen Wärme, die von der Bremsscheibe und den Bremsbelägen abgestrahlt wird, zu realisieren. Das Signalkabel kann dann in den U-förmigen Stegabschnitt 272 hineingelegt und in diesem befestigt sein. Dazu können Laschen 277 an dem Stegabschnitt 272 ausgebildet sein, die nach dem Einlegen des Signalkabels 271 in den Stegabschnitt 272 so umgebogen werden, dass das Signalkabel abschnittsweise ganz oder im Wesentlichen umfangsgeschlossen an dem Stegabschnitt 272 gehalten ist.

Der Stegabschnitt 272 kann die Öffnung 1d frei übergreifen. Dies bedeutet, dass der Stegabschnitt 272 nur an den beiden Enden - beispielsweise nach der vorstehend beschriebenen Art an dem Bremssattel 1 befestigt ist und vorzugsweise nicht an anderen Elementen der Scheibenbremse.

Der Stegabschnitt 272 kann aber auch optional oder alternativ (an einem seiner Enden oder eher mittig im Stegbereich 271) an dem die Öffnung 1d nicht vollständig überquerenden Niederhaltebügel 250 festgelegt sein, der nur einen der beiden Bremsbeläge 100, 200 niederhält.

Dazu ist es vorteilhaft, wenn eine weitere Lasche 278 des Stegabschnittes 272 an dem Belaghaltebügel 250 festgelegt ist (siehe **Fig. 22a****-c**)**.** Dieses Festlegen kann auf verschiedene Weise erfolgen. So kann es nach einer bevorzugten Variante derart erfolgen, dass die Lasche 278 um einen Steg 262 an dem Niederhaltebügel 250 gelegt ist und diesen umfasst. Es ist dabei weiter vorteilhaft, wenn der Steg 272 wie eine Art Fingerelement axial vom Ende des Niederhaltebügels 250 vorsteht, an dem er den ihm zugeordneten Bremsbelag radial niederhält. Derart ist es auf einfache Weise möglich, dass sich der Niederhaltebügel 250 und der Stegabschnitt 271 relativ zueinander begrenzt bewegen, insbesondere verschwenken können. Solche Relativbewegungen können bei Bremsungen auftreten. Die Lasche 278 kann dann allein das Gegenbefestigungsmittel 276 bilden. Dier Niederhaltebügel 250 ist ein an dem Bremssattel 1 befestigtes Teil, so dass die Kabelbrücke 271 derart wiederum - indirekt - an dem Bremssattel 1 befestigt ist.

Der Stegabschnitt 272 kann an dem Belaghaltebügel 250 aber auch auf andere Weise befestigt ein, beispielsweise mittels wenigstens einer Schraube oder einem Niet.

Es ist insofern - die Variante der Fig. 22 abstrahierend - vorteilhaft, wenn die Kabelbrücke 271 an dem Niederhaltebügel 250, insbesondere an dem Steg 262 des Niederhaltebügels 250, kraft- und/oder formschlüssig befestigt ist. Ein Kraftschluss kann beispielsweise durch ein klemmendes seitliches Anbringen der Kabelbrücke 272 an dem Niederhaltebügel 250 realisiert werden (nicht dargestellt). Dabei ist insbesondere ein seitliches - tangentiales - Ansetzen in Umfangsrichtung an den Niederhaltebügel 250 an einer Schmalseite des Niederhaltebügels 250 möglich.

Gebildet wird derart eine Art von Kabelbrücke 272, welche vorzugsweise die Funktion einer Kabelführung sowie einer thermischen und mechanischen Abschirmung übernimmt. Dabei ist die Kabelbrücke 272 hier wiebeschreiben einerseits auf der Zuspannseite am Bremssattel 1 fest angebunden (Schraubverbindung). Auf der Reaktionseite ist eine Art toleranzausgleichend wirkende Loslagerung derart dargestellt, dass die Kabelbrücke über ein Langloch am Belaghaltbügelbolzen bzw. Stift 255 fixiert ist. Somit kann die Kabelbrücke 272 gut die Sattelverformung kompensieren.

Die Befestigung kann aber auch so dargestellt werden, das der Belaghaltebolzen bzw. Stift als Festlager und die Befestigung am Sattel auf er aneren Seite der Öffnung 1d als Loslager ausgeführt wird.

Die Kabelführung an der Kabelbrücke 272 ist so ausgeführt, das sie so weit wie möglich von der Bremsscheibe entfernt ist, um die Temperaturbelastung so gering wie möglich zu halten. Anderseits wird die Kabelführung so plaziert, das sie sich im Schatten der axialen Zugstreben des Bremssattels 1 befindet, damit sie vor Fremdkörpern (z.B. Eis, Schmutz, Steine) welche von der Felge mitgenommen werden, gut geschützt ist. Das ermöglicht eine Reduzierung der Blechstärke an der Kabelführung auf ein Minimum.

Die Erfindung wird durch die oben beschriebenen Ausführungsbeispiele nicht eingeschränkt. Sie ist im Rahmen der beigefügten Ansprüche in verschiedener Weise modifizierbar.

**BEZUGSZEICHENLISTE**

| | |
|---|---|
| Bremssattel | 1 |
| Zuspannabschnitt | 1a |
| Sattelrücken | 1b |
| Zugstrebe | 1c |
| Öffnung | 1d |
| Öffnungen (Bohrungen) | 1e |
| Laschen | 1f |
| Ausnehmung | 1g |
| Bremsscheibe | 2 |
| Bremsscheibendrehachse | 2a |
| Bremsträger | 3 |
| Führungsholme | 4 |
| Belagschächte | 11, 12 |
| Abstützflächen | 11a, 11b; 12a, 12b |
| Belagschachtgrund | 11c; 12c |
| Bremsträgerhörner | 13, 14 sowie 15, 16 |
| Hinterschnitt | 17, 18 |
| Bremsbelag | 100 |
| Belagträger | 110 |
| Seitenkanten | 111, 112 |
| Vorsprung | 113, 114 |
| Haltebügel | 115 |
| Laschen | 116, 117 |
| Reibbelag | 120 |
| Belagfeder | 130 |
| Schlitz | 131, 132 |
| Enden | 133, 134 |
| Bremsbelag | 200 |
| Belagträger | 210 |
| Seitenkanten | 211, 212 |
| Laschen | 213,214 |
| Durchgangsloch | 215 |
| Öffnung | 216 |
| Formschlussmittel | 217 |
| Reibbelag | 220 |
| Belagfeder | 230 |
| Schlitze | 231, 232, 233 |
| Haube | 240 |
| Schenkel | 241,242 |
| Steg | 243 |
| Verbindungssteg | 244 |
| Ring | 245 |
| Niederhaltebügel | 250 |
| Ende | 251 |
| Ende | 252 |
| Bohrung | 253 |
| Stift | 254 |
| Bolzen/Stift | 255 |
| Feder | 256 |
| Durchgangsöffnung | 257 |
| Vorsprung | 258 |
| Schrauben | 259 |
| Sicherungselement | 260 |
| Laschen | 261 |
| Steg | 262 |
| Konturen | 2501, 2502 |
| Kabelbrücke | 271 |
| Stegabschnitt | 272 |
| Befestigungsmittel | 273, 274 |
| Gegenbefestigungsmittel | 275, 276 |
| Laschen | 277 |
| Lasche | 278 |
| Drehrichtung | U |
| Drehachse | D |

## Patentansprüche

1. Scheibenbremse (100) für ein Nutzfahrzeug, mit
a) einem eine Bremsscheibe (2) übergreifenden, vorzugsweise als Schiebesattel ausgebildeten, Bremssattel (1), der an einem ortsfesten Bremsträger (6) angeordnet ist und mit einer Zuspanneinrichtung zum Zuspannen der Bremse,
b) zwei Bremsbelägen (100, 200), die jeweils einen Belagträger (110, 210) und einen darauf befestigten Reibbelag (120, 220) aufweisen, von denen der eine als zuspannseitiger Bremsbelag (100) mittels der Zuspanneinrichtung auf der einen Seite der Bremsscheibe (2) gegen die Bremsscheibe (2) pressbar ist und von der andere als reaktionsseitiger Bremsbelag (200) auf der gegenüberliegenden Seite der Bremsscheibe (2) angeordnet ist, und die jeweils in einen Belagschacht (11, 12) eingesetzt sind,
c) wobei der Bremssattel eine zentrale Sattelöffnung (1d) über der Bremsscheibe (2) aufweist, durch welche die zwei Bremsbeläge (100, 200) in den jeweiligen Belagschacht einsetzbar sind,
**dadurch gekennzeichnet, dass**
d) ein Niederhaltebügel (250) vorgesehen ist, der derart ausgebildet ist, dass er lediglich den einen der beiden Bremsbeläge (100), 200) in seinem Belagschacht (11, 12) radial sichert, und
e) der Niederhaltebügel (250) mit seinem von dem Bremsbelag (200) abgewandten Ende an dem Bremssattel (1) gehalten ist.

2. Scheibenbremse nach Anspruch 1, **dadurch gekennzeichnet, dass** der Niederhaltebügel (250) lediglich den reaktionsseitigen Bremsbelag (200) im Belagschacht (12) radial sichert.

3. Scheibenbremse nach Anspruch 2, **dadurch gekennzeichnet, dass** der Niederhaltebügel (250) den einen Bremsbelag (200) ganz oder teilweise axial parallel zur Bremsscheibe (2) übergreift.

4. Scheibenbremse nach Anspruch 2 oder 3, **dadurch gekennzeichnet, dass** der Niederhaltebügel (250) lediglich den reaktionsseitigen Bremsbelag (200) vorzugsweise ganz oder teilweise axial parallel zur Bremsscheibe (2) übergreift und radial in seinem Belagschacht sichert.

5. Scheibenbremse nach Anspruch 2, 3 oder 4, **dadurch gekennzeichnet, dass** der Niederhaltebügel (250) mit seinem von dem radial zu sichernden, insbesondere reaktionsseitigen, Bremsbelag (200) abgewandten Ende lösbar an dem Bremssattel (1) gehalten ist.

6. Scheibenbremse nach einem der vorstehenden Ansprüche, **dadurch gekennzeichnet, dass** der Niederhaltebügel (250) an dem radial zu sichernden, insbesondere an dem reaktionsseitigen, Bremsbelag (200) festgelegt ist, insbesondere an einem Teil des reaktionsseitigen Bremsbelags (200) unlösbar festgelegt ist.

7. Scheibenbremse nach einem der vorstehenden Ansprüche, **dadurch gekennzeichnet, dass** der Belagschacht des zu sichernden, insbesondere des reaktionsseitigen, Bremsbelages in dem Bremsträger (110) oder in dem Bremssattel (1) ausgebildet ist und dass der Belagschacht des zuspannseitigen Bremsbelages in dem Bremsträger (110) ausgebildet ist.

8. Scheibenbremse nach Anspruch 6 oder 7, **dadurch gekennzeichnet, dass** der Niederhaltebügel (250) an einer Haube (240) und/oder einer Belagfeder (230) des niederzuhaltenden Bremsbelags (200) festgelegt ist.

9. Scheibenbremse nach einem der vorstehenden Ansprüche, **dadurch gekennzeichnet, dass** die Belagfeder (230) die Haube (240) ganz oder teilweise durchsetzt.

10. Scheibenbremse nach einem der vorstehenden Ansprüche, **dadurch gekennzeichnet, dass** die Belagfeder (230) mit der Haube (240) einstückig ausgebildet ist oder das er mit der Haube (240) stoffschlüssig verbunden ist.

11. Scheibenbremse nach einem der vorstehenden Ansprüche, **dadurch gekennzeichnet, dass** der Niederhaltebügel (250) mit der Haube (240) formschlüssig verbunden ist.

12. Scheibenbremse nach einem der vorstehenden Ansprüche, **dadurch gekennzeichnet, dass** der Niederhaltebügel (250) an dem Bremssattel (1) lösbar oder unlösbar befestigt ist oder einstückig mit diesem ausgebildet ist.

13. Scheibenbremse nach einem der vorstehenden Ansprüche, **dadurch gekennzeichnet, dass** der zuspannseitige Bremsbelag (100) mittels eines Formschlusses radial im Bremsträger (3) in seinem Belagschacht gesichert ist.

14. Scheibenbremse nach einem der vorstehenden Ansprüche, **dadurch gekennzeichnet, dass** der zuspannseitige Bremsbelag (100) mittels Vorsprüngen (17, 18) an dem Belagträger (210) radial im Bremsträger (3) gesichert ist.

15. Scheibenbremse nach einem der vorstehenden Ansprüche, **gekennzeichnet durch** eine Kabelbrücke (271), an der wenigstens ein Signalkabel angeordnet und gehalten ist, welche die Öffnung (1d) des Bremssattels (1) überbrückt und welche in wenigstens zwei Bereichen direkt oder indirekt an dem Bremssattel (1) befestigt ist.

16. Scheibenbremse nach einem der vorstehenden Ansprüche, **dadurch gekennzeichnet, dass** die Kabelbrücke (271) einen Stegabschnitt (272) aufweist, der an seinen beiden voneinander abgewandten Enden erste und zweite Befestigungsmittel (273 und 274) aufweist, die zur Befestigung der Kabelbrücke (271) an korrespondierenden ersten und zweiten Gegenbefestigungsmittel (275, 276) des Bremssattels (1) ausgelegt sind.

17. Scheibenbremse nach einem der vorstehenden Ansprüche, **dadurch gekennzeichnet, dass** die ersten und zweiten Befestigungsmittel (273 und 274) der Kabelbrücke (271) und die korrespondierenden ersten und zweiten Gegenbefestigungsmittel (275, 276) des Bremssattels (1) auf einer Seite der Öffnung (1d) eine weitestgehend toleranzfreie erste Befestigung bzw. auf der anderen Seite der Öffnung (1d) des Bremssattels (1) eine toleranzausgleichend wirkende zweite Befestigung ausbilden.

18. Scheibenbremse nach einem der vorstehenden Ansprüche, **dadurch gekennzeichnet, dass** die ersten und zweiten Befestigungsmittel (273 und 274) als ein Loch und als ein Langloch ausgebildet sind.

19. Scheibenbremse nach einem der vorstehenden Ansprüche, **dadurch gekennzeichnet, dass** die ersten und zweiten Befestigungsmittel (273 und 274) als ein Loch und als ein Langloch ausgebildet sind, die jeweils von einer Schraube oder einem Stift (255) durchgriffen sind, die am Bremssattel festgelegt sind.

20. Scheibenbremse nach Anspruch 19, **dadurch gekennzeichnet, dass** der Stift (255) auch der Befestigung des Niederhaltebügels (250) dient.

21. Scheibenbremse nach einem der Ansprüche 15 bis 20, **dadurch gekennzeichnet, dass** die Kabelbrücke an dem Niederhaltebügel (250), insbesondere an einem Steg (262) des Niederhaltebügels (250), kraft- und/oder formschlüssig befestigt ist.

22. Bremsbelagsatz für eine Scheibenbremse nach einem der vorstehenden Ansprüche, mit
a) einem reaktionsseitigen Bremsbelag ( 200) der einen Belagträger (210) und einen darauf befestigten Reibbelag ( 220) aufweist, wobei der Bremsbelag zum Zusammenwirken mit einem Niederhaltebügel (250) ausgebildet ist, welcher Niederhaltebügel (250) derart ausgebildet ist, dass er lediglich den reaktionsseitigen Bremsbelag (200) in seinem Belagschacht (12) an einer Scheibenbremse radial sichert und
b) mit einem zuspannseitigen Bremsbelag (100), der mittels wenigstens eines Formschlusselementes am Belagträger (110) radial im Bremsträger gesichert ist, wozu der zuspannseitige Bremsbelag (100) mittels Vorsprüngen (113, 114) an dem Belagträger (110) radial im Bremsträger (200) gesichert ist.

23. Bremsbelagsatz (100, 200) nach Anspruch 22, **dadurch gekennzeichnet, dass** der reaktionsseitige Bremsbelag (200) als Baueinheit mit einem Niederhaltebügel (250) ausgebildet ist, welcher Niederhaltebügel (250) derart ausgebildet ist, dass er lediglich den reaktionsseitigen Bremsbelag (200) in seinem Belagschacht 12) an einer Scheibenbremse radial sichert.

24. Bremsbelagsatz nach Anspruch 23, **dadurch gekennzeichnet, dass** der Niederhaltebügel (250) an dem reaktionsseitigen Bremsbelag (200) festgelegt ist, vorzugsweise unlösbar festgelegt ist.

25. Bremsbelagsatz nach Anspruch 24, **dadurch gekennzeichnet, dass** der Niederhaltebügel (250) an einer Haube (240) und/oder einer Belagfeder (230) befestigt ist.

26. Bremsbelagsatz nach einem der vorstehenden Ansprüche 22 bis 25, **dadurch gekennzeichnet, dass** der Niederhaltebügel (250) mit der Haube (240) einstückig ausgebildet ist.

27. Bremsbelag nach einem der vorstehenden Ansprüche, **dadurch gekennzeichnet, dass** der Niederhaltebügel (250) mit der Haube (240) stoffschlüssig verbunden ist und/oder formschlüssig verbunden ist.

## Claims

1. A disk brake (100) for a utility vehicle, having
a) a brake calliper (1) that engages over a brake disk (2) and is preferably designed as a sliding calliper, which is in turn arranged on a positionally fixed brake carrier (6) and has an application device for applying the brake,
b) two brake pads (100, 200), each of which has a pad carrier (110, 210) to which a friction pad (120, 220) is fixed, one of these brake pads (120, 200) being an application-side brake pad (100) that can be pressed against the brake disk (2) by means of the application device on one side of the brake disk (2), and the other being a reaction-side brake pad (200) that is arranged on the opposite side of the brake disk (2), the two brake pads (120, 200) each being inserted in a pad slot (11, 12),
c) the brake calliper (1) having above the brake disk (2) a central calliper opening (1d), through which the two brake pads (100, 200) can be inserted into their respective pad slots,
**characterised in that**
d) there is provided a hold-down clip (250) that is designed so as to radially secure only one of the two brake pads (100, 200) in its pad slot (11, 12), and
e) the end of the hold-down clip (250) averted from the brake pad (200) is held on the brake calliper (1).

2. A disk brake according to claim 1, **characterised in that** the hold-down clip (250) radially secures only the reaction-side brake pad (200) in the pad slot (12).

3. A disk brake according to claim 2, **characterised in that** the hold-down clip (250) engages over one brake pad (200) in a manner entirely or partially axially parallel to the brake disk (2)

4. A disk brake according to claim 2 or 3, **characterised in that** the hold-down clip (250) engages over only the reaction-side brake pad (200), preferably in a manner entirely or partially axially parallel to the brake disk (2) and secures it radially in its pad slot.

5. A disk brake according to claim 2, 3 or 4, **characterised in that** the end of the hold-down clip (250) averted from the brake pad (200), in particular the reaction-side brake pad (200), to be secured radially is held releasably on the brake calliper (1).

6. A disk brake according to any one of the preceding claims, **characterised in that** the hold-down clip (250) is fastened to the brake pad (200), in particular the reaction-side brake pad (200), to be secured radially, in particular non-releasably fixed to a part of the reaction-side brake pad (200).

7. A disk brake according to any one of the preceding claims, **characterised in that** the pad slot of the brake pad, in particular of the reaction-side brake pad, to be secured is formed in the brake carrier (110) or in the brake calliper (1), and the pad slot of the application-side brake pad is formed in the brake carrier (110).

8. A disk brake according to claim 6 or 7, **characterised in that** the hold-down clip (250) is fastened on a cover (240) and/or on a pad spring (230) of the brake pad (200) to be held down.

9. A disk brake according to any one of the preceding claims, **characterised in that** the pad spring (230) passes fully or partially through the cover (240).

10. A disk brake according to any one of the preceding claims, **characterised in that** the pad spring (230) is formed in one piece with the cover (240) or connected to the cover (240) by bonding.

11. A disk brake according to any one of the preceding claims, **characterised in that** the hold-down clip (250) is connected to the cover (240) in a form-fit.

12. A disk brake according to any one of the preceding claims, **characterised in that** the hold-down clip (250) is fixed releasably or non-releasably to the brake calliper (1) or is formed in one piece with it.

13. A disk brake according to any one of the preceding claims, **characterised in that** the application-side brake pad (100) is secured radially in the brake carrier (3) in its pad slot by means of a form fit.

14. A disk brake according to any one of the preceding claims, **characterised in that** the application-side brake pad (100) is secured radially in the brake carrier (3) by means of projections (17, 18) on the pad carrier (210).

15. A disk brake according to any one of the preceding claims, **characterised by** a cable bridge (271), on which is arranged and held at least one signal cable that bridges the opening (1d) of the brake calliper (1) and is fixed directly or indirectly to the brake calliper (1) in at least two regions.

16. A disk brake according to any one of the preceding claims, **characterised in that** the cable bridge (271) has a web portion (272) that has at its two mutually averted ends first and second fixing means (273, 274) that are designed to fix the cable bridge (271) to corresponding first and second counterpart fixing means (275, 276) of the brake calliper (1).

17. A disk brake according to any one of the preceding claims, **characterised in that** the first and second fixing means (273, 274) of the cable bridge (271) and the corresponding first and second counterpart fixing means (275, 276) of the brake calliper (1) form a substantially tolerance-free first fixing on one side of the opening (1d) and a second fixing with a tolerance-compensating action on the other side of the opening (1d) of the brake calliper (1).

18. A disk brake according to any one of the preceding claims, **characterised in that** the first and second fixing means (273, 274) take the form of a hole and an elongated hole.

19. A disk brake according to any one of the preceding claims, **characterised in that** the first and second fixing means (273, 274) take the form of a hole and an elongated hole, through each of which engage a screw or a pin (255) that is fastened to the brake calliper.

20. A disk brake according to claim 19, **characterised in that** the pin (255) also serves to fix the hold-down clip (250).

21. A disk brake according to any one of claims 15 to 20, **characterised in that** the cable bridge is fixed to the hold-down clip (250), in particular to a web (262) of the hold-down clip (250), in a force fit and/or a form fit.

22. A brake pad set for a disk brake according to any one of the preceding claims, having
a) a reaction-side brake pad (200) that has a pad carrier (210) to which a friction pad (220) is fixed,
the brake pad being designed to cooperate with a hold-down clip (250), which is in turn designed so as to radially secure only the reaction-side brake pad (200) in its pad slot (12) on a disk brake, and
b) having an application-side brake pad (100) that is secured radially in the brake carrier by means of at least one form-fit element on the brake carrier (110), to which end the application-side brake pad (100) is secured radially in the brake carrier (200) by means of projections (113, 114) on the brake carrier (110).

23. A brake pad set (100, 200) according to claim 22, **characterised in that** the reaction-side brake pad (200) is designed as a unit with a hold-down clip (250), which is in turn designed so as to radially secure only the reaction-side brake pad (200) in its pad slot (12) on a disk brake.

24. A brake pad set according to claim 23, **characterised in that** the hold-down clip (250) is fastened to the reaction-side brake pad (200), preferably non-releasably fastened.

25. A brake pad set according to claim 24, **characterised in that** the hold-down clip (250) is fixed to a cover (240) and/or to a pad spring (230).

26. A brake pad set according to any one of claims 22 to 25 above, **characterised in that** the hold-down clip (250) is formed in one piece with the cover (240).

27. A brake pad according to any one of the preceding claims, **characterised in that** the hold-down clip (250) is connected to the cover (240) by a bonded connection and/or in a form fit.

## Revendications

1. Frein (100) à disque d'un véhicule utilitaire, comprenant
a) un étrier (1) de frein, qui enjambe un disque (2) de frein, qui est constitué de préférence en étrier coulissant et qui est monté sur un flasque (6) de frein fixe en position et comprenant un dispositif de serrage pour serrer le frein,
b) deux garnitures (100, 200) de frein, qui ont chacune un porte garniture (110, 210) et une garniture (120, 220) de friction, qui y est fixée, dont l'une peut être pressée en tant que garniture (100) de frein du côté du serrage au moyen du dispositif de serrage sur l'une des faces du disque (2) de frein sur le disque (2) de frein et dont l'autre est disposée en tant que garniture (200) de frein du côté de la réaction sur la face opposée du disque (2) de frein, et qui sont utilisées chacune dans un puits (11, 12) de garniture,
c) dans lequel l'étrier de frein a une ouverture (1d) centrale d'étrier au-dessus du disque (2) de frein, par laquelle les deux garnitures (100, 200) de frein peuvent être insérées dans le puits de garniture respectif,
**caractérisé en ce que**
d) il est prévu une bride (250) de maintien vers le bas, qui est constituée de manière à bloquer radialement seulement l'une des deux garnitures (100, 200) de frein dans son puits (11, 12) de garniture, et
e) la bride (250) de maintien vers le bas est maintenue sur l'étrier (1) de frein par son extrémité loin de la garniture (200) de frein.

2. Frein à disque suivant la revendication 1, **caractérisé en ce que** la bride (250) de maintien vers le bas bloque radialement seulement la garniture (200) de frein du côté de la réaction dans le puits (12) de garniture.

3. Frein à disque suivant la revendication 2, **caractérisé en ce que** la bride (250) de maintien vers le bas enjambe la une garniture (200) de frein en tout ou partie axialement parallèlement au disque (2) de frein.

4. Frein à disque suivant la revendication 2 ou 3, **caractérisé en ce que** la bride (250) de maintien vers le bas enjambe seulement la garniture (200) de frein du côté de la réaction, de préférence en tout ou partie, axialement parallèlement au disque (2) de frein et la bloque radialement dans son puits de garniture.

5. Frein à disque suivant la revendication 2, 3 ou 4, **caractérisé en ce que** la bride (250) de maintien vers le bas est maintenue de manière amovible sur l'étrier (1) de frein par son extrémité loin de la garniture (200) de frein à bloquer radialement, notamment du côté de la réaction.

6. Frein à disque suivant l'une des revendications précédentes, **caractérisé en ce que** la bride (250) de maintien vers le bas est fixée à la garniture (200) de frein à bloquer radialement, notamment du côté de la réaction, en étant fixée notamment de manière inamovible à une partie de la garniture (200) de frein du côté de la réaction.

7. Frein à disque suivant l'une des revendications précédentes, **caractérisé en ce que** le puits de garniture de la garniture de frein à fixer, notamment du côté de la réaction, est constitué dans le flasque (110) de frein ou dans l'étrier (1) de frein et **en ce que** le puits de garniture de la garniture de frein du côté du serrage est constitué dans le flasque (110) de frein.

8. Frein à disque suivant la revendication 6 ou 7, **caractérisé en ce que** la bride (250) de maintien vers le bas est fixée à une hotte (240) et/ou à un ressort (230) de garniture de la garniture (200) de frein à maintenir vers le bas.

9. Frein à disque suivant l'une des revendications précédentes, **caractérisé en ce que** le ressort (230) de garniture traverse la hotte (240) en tout ou partie.

10. Frein à disque suivant l'une des revendications précédentes, **caractérisé en ce que** le ressort (230) de garniture est constitué d'une seule pièce avec la hotte (240) ou il est relié à coopération de matière avec la hotte (240).

11. Frein à disque suivant l'une des revendications précédentes, **caractérisé en ce que** la bride (250) de maintien vers le bas est reliée à complémentarité de forme à la hotte (240).

12. Frein à disque suivant l'une des revendications précédentes, **caractérisé en ce que** la bride (250) de maintien vers le bas est fixée de manière amovible ou inamovible à l'étrier (1) de frein ou est constituée d'une seule pièce avec celui-ci.

13. Frein à disque suivant l'une des revendications précédentes, **caractérisé en ce que** la garniture (100) de frein du côté du serrage est bloquée dans son puits de garniture au moyen d'une complémentarité de forme radialement dans le flasque (3) de frein.

14. Frein à disque suivant l'une des revendications précédentes, **caractérisé en ce que** la garniture (100) de frein du côté du serrage est bloquée radialement dans le flasque (3) de frein au moyen de saillies (17, 18) sur le flasque (210) de frein.

15. Frein à disque suivant l'une des revendications précédentes, **caractérisé par** un pont (271) de câble, sur lequel est disposé et est retenu au moins un câble de signal, qui enjambe l'ouverture (1d) de l'étrier (1) de frein et qui est fixé en au moins deux parties directement ou indirectement à l'étrier (1) de frein.

16. Frein à disque suivant l'une des revendications précédentes, **caractérisé en ce que** le pont (271) de câble a une partie (272) d'âme, qui a à ses deux extrémités éloignées l'une de l'autre des premier et des deuxième moyens (273 et 274) de fixation, qui sont conçus pour la fixation du pont (271) de câble à des premier et deuxième moyens (275, 276) correspondants de fixation antagonistes de l'étrier (1) de frein.

17. Frein à disque suivant l'une des revendications précédentes, **caractérisé en ce que** les premier et deuxième moyens (273 et 274) de fixation du pont (271) de câble et les premier et deuxième moyens (275, 276) correspondants antagonistes de fixation de l'étrier (1) de frein constituent d'un côté de l'ouverture (1d) une première fixation dans une grande mesure sans tolérance et, de l'autre côté de l'ouverture (1d) de l'étrier (1) de frein, une deuxième fixation agissant en compensation de tolérance.

18. Frein à disque suivant l'une des revendications précédentes, **caractérisé en ce que** les premier et deuxième moyens (273 et 274) de fixation sont constitués sous la forme d'un trou et sous la forme d'une boutonnière.

19. Frein à disque suivant l'une des revendications précédentes, **caractérisé en ce que** les premier et deuxième moyens (273 et 274) de fixation sont constitués sous la forme d'un trou et sous la forme d'une boutonnière, dans lesquels passe respectivement une vis ou une broche (255) qui sont fixées à l'étrier de frein.

20. Frein à disque suivant la revendication 19, **caractérisé en ce que** la broche (255) sert également à la fixation de la bride (250) de maintien vers le bas.

21. Frein à disque suivant l'une des revendications 15 à 20, **caractérisé en ce que** le pont de câble est fixé à coopération de force et/ou à complémentarité de forme sur la bride (250) de maintien vers le bas, notamment sur une âme (262) de la bride (250) de maintien vers le bas.

22. Ensemble de garnitures de frein pour un frein à disque suivant l'une des revendications précédentes, comprenant
a) une garniture (200) de frein du côté de réaction, qui a un flasque (210) de garniture et une garniture (220) de friction, qui y est fixée, dans lequel
la garniture de frein est constituée pour coopérer avec une bride (250) de maintien vers le bas, laquelle bride (250) de maintien vers le bas est constituée de manière à bloquer radialement seulement la garniture (200) de frein du côté de la réaction dans son puits (12) de garniture sur un frein à disque, et
b) comprenant une garniture (100) de frein du côté du serrage, qui est bloquée radialement dans le flasque de frein au moyen d'un élément de complémentarité de forme du flasque (110) de frein, la garniture (100) de frein du côté du serrage étant bloquée à cet effet radialement dans le flasque (200) de frein au moyen de saillies (113, 114) du flasque (110) de garniture.

23. Ensemble (100, 200) de garnitures de frein suivant la revendication 22, **caractérisé en ce que** la garniture (200) de frein du côté de la réaction est constituée sous la forme d'une unité de construction avec une bride (250) de maintien vers le bas, laquelle bride (250) de maintien vers le bas est constituée de manière à bloquer radialement seulement la garniture (200) de frein du côté de la réaction dans son puits (12) de garniture sur un frein à disque.

24. Ensemble de garnitures de frein suivant la revendication 23, **caractérisé en ce que** la bride (250) de maintien vers le bas est fixée en étant de préférence fixée de manière inamovible, à la garniture (200) de frein du côté de la réaction.

25. Ensemble de garnitures de frein suivant la revendication 24, **caractérisé en ce que** la bride (250) de maintien vers le bas est fixée à une hotte (240) et/ ou à un ressort (230) de garniture.

26. Ensemble de garnitures de frein suivant l'une des revendications 22 à 25 précédentes, **caractérisé en ce que** la bride (250) de maintien vers le bas est constituée d'une seule pièce avec la hotte (240).

27. Garniture de frein suivant l'une des revendications précédentes, **caractérisé en ce que** la bride (250) de maintien vers le bas est reliée à coopération de matière et/ou est reliée à complémentarité de forme à la hotte (240).
